(19)

Europäisches
Patentamt
European
Patent Office
Office européen
des brevets

(11)     **EP 4 495 705 A1**

(12)     **EUROPEAN PATENT APPLICATION**

(43) Date of publication:
**22.01.2025   Bulletin 2025/04**

(21) Application number: **24188629.0**

(22) Date of filing: **15.07.2024**

(51) International Patent Classification (IPC):
*G03H 1/22* (2006.01)          *G06V 10/24* (2022.01)
*G03H 1/08* (2006.01)

(52) Cooperative Patent Classification (CPC):
**G03H 1/2294; G06V 10/245;** G03H 2001/0816;
G03H 2001/2247; G03H 2001/2252

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.07.2023  GB 202311216**

(71) Applicant: **Envisics Ltd
Milton Keynes MK1 1PT (GB)**

(72) Inventors:
 • **CRESPEL, Thomas
  Milton Keynes, MK1 1PT (GB)**
 • **COONEY, Rory
  Milton Keynes, MK1 1PT (GB)**

(74) Representative: **Greenaway, Martin William
 Apollo House
 6 Bramley Road
 Milton Keynes MK1 1PT (GB)**

(54)     **HOLOGRAPHIC PROJECTION SYSTEM**

(57)     There is provided a holographic projection system for forming, at a replay plane, a holographic reconstruction of a picture comprising an array of pixels. The system comprises a detector arrangement arranged to detect light received by a first detection area. The system is arranged to perform an optical alignment process. The optical alignment process comprises selecting a first pixel of the array of pixels. The optical alignment process comprises forming a first holographic reconstruction of a first picture, the first picture comprising a primary control region comprising the selected first pixel. The optical alignment process further comprises moving the first holographic reconstruction with respect to the first detection area in a first dimension of the replay plane such that the first holographic reconstruction is moved between a plurality of positions. The optical alignment process further comprises determining a value for a parameter of the light received by the first detection area in each of the plurality of positions and comparing each respective determined parameter value to a threshold condition. If the threshold condition is not met over the plurality of positions, the holographic projection system is arranged to repeat the optical alignment process by: selecting a second pixel of the array of pixels that neighbours the first pixel; and forming a second holographic reconstruction of a second picture, the second picture comprising a primary control region comprising the second pixel.

FIGURE 16A

**Description**

FIELD

The present disclosure relates to a holographic projection system arranged to perform an optical alignment process as well as a method of performing an optical alignment process. More specifically, the present disclosure relates performing an optical alignment process for compensating for a change in the tilt of a display device of the holographic projection system. Even more specifically, the present disclosure relates to performing an optical alignment process which can be performed during normal runtime of the system without adversely affecting the viewing experience. Some embodiments relate to a holographic projector, picture generating unit or head-up display.

BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

SUMMARY

Aspects of the present disclosure are defined in the appended independent claims.

In general terms, there is provided a holographic projection system for forming a holographic reconstruction of a picture. The holographic projection system is arranged to perform an optical alignment process. The optical alignment process is suitable for being performed repeatedly. The optical alignment process is suitable for being performed during (normal) runtime of the holographic projection system (without adversely affecting the viewing experience). The holographic projection system according to the present disclosure may be arranged to perform an optical alignment process for compensating for a misalignment of the holographic reconstruction at a sub-pixel level. That is, the optical alignment process performed by the holographic projection system may compensate for misalignments of the formed holographic reconstruction by translating the holographic reconstruction by distances that are less than a pixel pitch of the holographic reconstruction (i.e. the distance between the respective centres of adjacent pixels of the holographic reconstruction).

The holographic projection system may be arranged to spatially modulate light in accordance with a hologram to form a holographic wavefront. The holographic projection system may be arranged such that the holographic wavefront forms the holographic reconstruction. For example, the holographic projection system may comprise a display device such as a spatial light modulator (e.g. a liquid crystal on silicon spatial light modulator). The display device may be arranged to display the hologram (or a sequence of holograms). Light incident thereon (for example, light received by the display device from a light source, such as a coherent light source, e.g. a laser) may be spatially modulated in accordance with the respective displayed hologram to form the holographic wavefront. The holographic projection system according to the present disclosure may be arranged to compensate for a misalignment of the holographic reconstruction formed by the system caused by a misalignment of the display device, for example a tilt of the display device. For example, the display device may be substantially planar (and / or comprise a substantially planar surface for receiving light). A tilt of the display device may cause the normal of the substantially planar display device / surface to change. This may cause the holographic reconstruction formed by (spatially modulated) light incident on the display device to move / become misaligned. The optical alignment process according to the present disclosure may compensate for this tilt of the display device.

There are many different factors that a holographic projection system may be arranged to compensate for. If there is a predictable relationship between the particular factor and the amount of compensation needed, then a holographic projection system may be arranged to use a compensation model to compensate for that factor. For example, one factor may be temperature. Changes in temperature may cause optical misalignments of components of the holographic projection system. The amount of optical misalignment may change in a predictable (e.g. linear) manner with changes in temperature. Thus, it is possible to correct for such optical misalignments by programming a holographic projection system with a compensation model relating the factor (e.g. temperature) to the amount of misalignment / compensation needed. The factor (such as temperature) is measured and input into the compensation model to output an amount of compensation which may be applied to the target picture (to be holographically reconstructed), for example. In such arrangements, there is no need to directly measure the optical misalignment in order to correct for it. Instead, the compensation required is inferred from a measurement of the respective factor (e.g. temperature). This is generally advantageous as measuring, for example, temperature may be more straightforward than quantifying an optical misalignment through direct measurement of the misalignment.

After thorough simulation and experimentation, the inventors have found that the relationship between environmental factors of the holographic projection system (such as temperature) and the tilt angle of the display device is not predictable. In other words, the inventors have found that quantifying or predicting the tilt for given environmental (e.g. thermal) conditions is impractical. Thus, the inventors have not been able to devise a reliable compensation model for the display device tilt (e.g. taking temperature as input). The inventors have thus recognised that an optical alignment process that compensates for the tilt of the display device by directly quantifying the optical alignment may be necessary.

A holographic projection system for performing an optical alignment process which directly determines an optical misalignment has previously been proposed in British patent, GB2559112B, which was published on 1 August 2018. GB2559112B discloses a holographic projection system comprising a spatial light modulator arranged to receive the light from a light source and output spatially modulated light in accordance with a computer generated hologram of a picture represented on the spatial light modulator to form an image on a light receiving surface of the system. The image (which is a holographic reconstruction) comprises a primary image region comprising information for a user and a secondary image region not intended to be viewable by the user. The system further comprises a detector arranged to detect the optical power of light travelling to or from the secondary image region of the image and received by the detector. The system further comprises a holographic controller arranged to perform the optical alignment process, which comprises changing the position of the image on the screen and detecting the optical power of the received light at a plurality of positions of the image. In some examples, the computer-generated hologram (displayed on the display device) comprises a component (e.g. a grating function) arranged to perform a translation of the holographic reconstruction / image and wherein the position of the image is changed during the optical alignment process by changing the grating function such as changing the periodicity of the grating function. In such examples, the optical alignment process may comprise determining the (periodicity of the) grating function which gives rise to the greatest detected optical power (also referred to herein is an optical power peak). In this way the optical misalignment can be quantified / compensated for using an appropriate grating function (for example, which gives rise to the optical power peak).

The inventors have found that the optical alignment process of GB2559112B provides a reliable method of determining an optically aligned position at least initially (for example, in a boot-up routine of the holographic projection system). However, the optical alignment of the system / position of the holographic reconstruction may change overtime. This may be, for example, because of changes in environmental conditions such as temperature. For example, the tilt of the display device may change during use (e.g. runtime) of the system. Thus, there is a need to repeatedly run an optical alignment process during runtime of the holographic projection system to compensate for the changes in the tilt. The inventors have found that the optical alignment process of GB2559112B may adversely affect the viewing experience when performed during runtime of the holographic projection system if the optical misalignment of the system has changed significantly relative to the previous / initial alignment (for example, the secondary image region has been translated a distance greater or equal than a pixel pitch - optionally, greater or equal than multiple pixel pitches - of the reconstruction). This is explained in more detail below.

The holographic reconstruction formed by the holographic projection system is typically pixellated. The target picture (which is holographically reconstructed by the holographic projection system) may also be pixellated (i.e. the target picture may comprise an array of pixels and the holographic reconstruction may comprise a corresponding array of pixels or image points). The target picture (and holographic reconstruction) comprises the secondary image region which may be referred to as a control region. The optical alignment of process of GB2559112B effectively comprises running a scan, by scanning (translating) the holographic reconstruction with respect to the detector, for example using grating functions. The holographic reconstruction is moved on a replay plane of the system. The scan distance needed to detect an optical power peak depends on the relative distance between a first or initial position of the holographically reconstructed control region on the replay plane and the detector. This distance may be measured from an initial or first position of the control region of the holographic reconstruction on the replay plane to the detector. The larger the relative distance, the larger the scan distance needed to detect an optical power peak. When the scan is performed (e.g. by applying gratings during the optical alignment process), the entire holographically reconstructed image is translated on the replay plane. This means that both the primary and the secondary image (or control) regions of the holographic reconstruction are moved / translated on the replay plane. The inventors have recognised that this means that the image content of the primary image region (which is intended to be viewable at an eye-box / viewing window of the system during normal runtime) is moved as part of the optical alignment process. The inventors have recognised that, as the scan distance becomes larger, movement of the holographic reconstruction may be perceptible which may adversely affect the viewing experience. For example, the holographic reconstruction may need to be moved a distance equivalent to multiple pixels or more (i.e. a distance greater than a pixel pitch of the holographic reconstruction, such as a distance equal to a multiple of the pixel pitch) before an optical power peak is detected. Such distances may be perceptible to a user of the system and may adversely affect the viewing experience. For example, the (primary image region of the) holographic reconstruction may appear to move or even jump around as it is scanned / translated which may be distracting or uncomfortable. Thus, the inventors have recognised that, as the scan distance increases, the optical alignment method may become unsuitable for use during normal runtime of the holographic projection system, for example.

The inventors have found that the amount of shift or translation of the pixels of the holographic reconstruction caused by a change in the misalignment (for example, change in the tilt) of a display device may be assumed to be substantially equal for all pixels of the holographic reconstruction. In other words, it may be assumed that a global shift or translation is applied to each of the pixels of the holographic reconstruction. The inventors have therefore recognised that the shift or translation caused by the change in the misalignment of the display device can be quantified / determined / compensated for using a control region at any pixel position of the holographic reconstruction. This is because the misalignment / amount of compensation needed is the same for all pixels.

The inventors have further found that, in a real world setting, the proportion of the shift or translation of the pixels of the holographic reconstruction caused by a change in the misalignment (e.g. tilt) of the display device is relatively small compared to other factors such as, for example, a scaling of the holographic reconstruction caused by a change in the wavelength of the light forming the holographic reconstruction (in turn caused by a change in temperature, for example). Thus, the inventors have recognised that the predominant cause of the scanning distance becoming relatively large as the holographic reconstruction is shifted over time / because of changing conditions is due these "other" factors (such as wavelength changes) rather than because of the changing misalignment of the display device (which is the optical misalignment that the present optical alignment process is intended to address). Thus, the inventors have identified that the main reason for the scanning distance needing to increase is due to translations caused by factors other than the misalignment / tilt of the display device (i.e. factors other than the factor to be determined - i.e. a change display device tilt).

As such, the inventors have developed an optical alignment method which comprises performing a first scan with a first holographic reconstruction of a first picture comprising a (primary) control region comprising a first pixel over a limited scan range and, if a threshold condition is not met in the limited scan range, repeating the process by performing a second scan with a second holographic reconstruction of a second picture. Like the first picture, the second picture comprises a (primary) control region. However, the (primary) control region of the second picture is re-selected. In particular, the (primary) control region of the second picture is reselected to comprise a second pixel which neighbours the first pixel. The concept is that, because the threshold is not met in the first scan, it is known that the (primary) control region of the first picture is too far from the detector (in an initial or first position) to be detected during the first scan (over the limited scan area). It may be assumed that the second (neighbouring) pixel is now closer to the detector than the first pixel (e.g. because of changing environmental factors / conditions changing the locations and distribution of pixels of the holographic reconstruction). It may also be assumed that this repositioning is predominantly caused by factors other than display device tilt (in particular, scaling caused by a change in wavelength of light incident on the display device). By re-selecting the (primary) control region of the second picture, the initial or first position of the holographic reconstruction of the (primary) control region of the second picture is formed closer to the detector (and so is within the limited scan range of the second or repeated scan). The optical power peak should therefore be detected in the second scan. The inventors have recognised that, because the change in the position of each pixel caused by the change in misalignment / tilt of the display device is constant, it does not matter that the control region is reselected. The re-selected control region (having a different pixel position on the replay plane) is just as suitable for determining the change in misalignment caused by the display device (e.g. tilt of the display device) as the originally selected control region. In some embodiments, the holographic projection system may be arranged to introduce an offset compensating for the re-selection of the control region. For example, if the control region is reselected to comprise a second pixel that is adjacent to the first pixel in a first direction, a corresponding offset may be introduced in a second direction equal to the distance between the first and second pixel. In some embodiments, the holographic projection system may comprise two control regions (e.g. first and second control regions). In such embodiments, the optical alignment method may comprise determining an average of the shift required to align the first control region with a first detection area and the shift required to align the second control region with a second detection area. In such embodiments, there may be no need to introduce an offset when the control region(s) are re-selected. The average shift / average translation may compensate for this automatically. Similarly, the average shift / average translation may advantageously automatically compensate for a scaling effect (for example, caused by a change in the wavelength of the light forming the holographic reconstruction). Unlike the translation caused by the display device tilt (which is global), the scaling effect may affect different pixels differently (for example, may be in opposite directions at the different selected pixels). By averaging measurements of different shifts of the respective control regions of the first and second pictures, the difference shifts caused by scaling cancel out / are removed, leaving the global shift.

The inventors have found that, by re-selecting the control region(s) as described (and performing a scan for each picture / control region), the scan range can be significantly reduced. In some examples, the scan range may be less than a pixel pitch of the holographic reconstruction, for example. The inventors have recognised that such a small scan range may not be perceptible to a user of the holographic projection system. Thus, a jumpy appearance of the holographic reconstruction while the method is performed may advantageously be reduced or minimised. The inventors have also found that the optical alignment process can be used to achieve sub-pixel alignment accuracy.

In a first aspect, there is provided a holographic projection system. The holographic projection system is arranged to (is suitable for) forming, at a replay plane, a holographic reconstruction of a picture comprising an array of pixels or image points. Because the picture is pixellated, the holographic reconstruction may also be pixellated. The system comprises a detector arrangement arranged to detect light received by a first detection area of the detector arrangement The holographic projection system is arranged to perform an optical alignment process. In some embodiments, the holographic projection system comprises a controller (e.g. a holographic controller) arranged to perform the optical alignment process.

The optical alignment process comprises the step of selecting a first pixel of the array of pixels.

The optical alignment process further comprises the step of forming a first holographic reconstruction of a first picture. The first holographic reconstruction may be formed at the replay plane. The first picture comprises a primary control region comprising the selected first pixel. The pixel or pixels of the primary control region of the first picture (including the first pixel) may be referred to as being in an "on" state or switched on. An area adjacent to and, optionally, surrounding, the primary control region may be comprise pixels in an "off" state, or switched off. In other words, the primary control region may be a region of the picture comprising content and may be adjacent to (and optionally surrounded by) a region comprising no content. The primary control region may consist of the selected first pixel. In other words, the primary control region may be a single picture control region. The holographic projection system may be arranged such that the first holographic reconstruction of the first picture is formed in a first position. It may be formed in this first position initially. In the first position, it may be expected that the primary control region is aligned with the first detection area. For example, a calibration process may previously have been performed. The previously performed calibration process may have been used to align the primary control region with the first detection area. For example, an initial grating function may have been determined during the calibration process which (at the time of the calibration process) correctly aligned the first control region with the first detection area (in a first dimension of the replay plane). The initial diffraction grating may be stored in a memory of the holographic projection system. If nothing has changed since the calibration process, the first holographic reconstruction (in the first position, for example) may be substantially aligned with the first detection area using the initial diffraction grating. However, if the optical alignment of the holographic projection system has since changed (for example, because a tilt angle of a display device of the system has changed), then the first holographic reconstruction (in the first position) may not be substantially aligned with the first detection area.

The optical alignment process further comprises moving the first holographic reconstruction with respect to the first detection area. In other words, the first holographic reconstruction may be translated or scanned. This step of the process may be referred to as performing a first scan. In the first scan, the first holographic reconstruction is moved / translated / scanned in a first dimension of the replay plane. The first holographic reconstruction is moved between a plurality of positions. The distance (in the first dimension of the replay plane) between two furthest (or most extreme) positions of the plurality of positions may be referred to as the scan range (i.e. the range over which the first holographic reconstruction is moved / scanned). The first scan may be said to have a first scan range.

The optical alignment process further comprises determining a value for a parameter of the light received by the first detection area in each of the plurality of positions. The values(s) for the parameter may be based on signals received from the first detection area. For example, the first detector may be arranged to continuously monitor the value of the parameter as the first reconstruction is moved / throughout the first scan. The parameter may be related to the optical power detected / received by the first detection area. The optical alignment process further comprises comparing each respective determined parameter value to a threshold condition. The threshold condition may be related to an expected value of the parameter value in an aligned state of the primary control region with the first detection area (e.g. in which the maximum amount of light is received by the first detection area). For example, if the parameter is the optical power, the threshold condition may be the value for the optical power equalling or exceeding a predetermined value for the optical power, which may be representative of the first detection area being substantially aligned with the first detection area. If the threshold condition is not met in any or each of the plurality of positions of the first holographic reconstruction, then this may indicate that the primary control region does not come into alignment with the first detection area during the first scan. This may indicate that the holographic projection system is such that the primary control region is so misaligned as to be formed (initially) on the replay plane in an area that is outside of the scan area of the first scan (i.e. as the primary control region is moved / scanned it does not coincide with / become aligned with the first detection area).

The optical alignment process further comprises the following step if the threshold condition is not met over the plurality of positions of the first holographic reconstruction (e.g. if the threshold condition is not met in any or each of the plurality of positions). In particular, the holographic projection system is arranged to repeat the optical alignment process. The repeated optical alignment process comprises: a) selecting a second pixel of the array of pixels that neighbours the first pixel; and b) forming a second holographic reconstruction (at the replay plane) of a second picture. The second picture comprises a primary control region (that may be different to the primary control region of the first picture). Herein, the primary control region of the first picture may be referred to as the first primary control region and the primary control region of the second picture may be referred to as the second primary control region. The (second) primary control region (of the second picture) comprises the selected second pixel. The second picture may comprise different "on" and "off" pixels to the first picture. For example, the pixel of second picture corresponding to the first pixel of the first picture may be switched off in the second picture.

The first and second primary control region may have substantially the same form (e.g. the same shape). The first pixel of the first primary control region may have a location in the first primary control region that corresponds to the location of the second pixel in the second primary control region. For example, if the first pixel is located substantially at the centre of the first primary control region, the second pixel may be located substantially at the centre of the second primary control region. In such cases, the primary control region may be said to be centred on the respective selected (first or second) pixel. Thus, by selecting a different (second) pixel when the optical alignment process is repeated, the primary control region may effectively be shifted or moved on the replay plane. It may be said that the pixel location of the second primary control region is shifted relative to the pixel location of the first primary control region. In other words, the position of the primary control region may be changed without changing the form (e.g. shape) of the primary control region. In some embodiments, both the first and second primary control regions consist of a single pixel (and so, respectively, consist only of the first or second selected pixel).

The advantage of performing a first scan with a first holographic reconstruction of a first picture comprising a (first) primary control region and then forming a second holographic reconstruction of a second picture comprising a (second) primary control region (which is shifted in pixel position relative to the first primary control region) has already been described above. In particular, it allows for a relatively small scan range to be selected (e.g. for the first scan) and, if the threshold condition is not met, perform another scan with a shifted (initial position) primary control region. In this way, the viewing experience of a user of the holographic projection system may not be adversely affected by the holographic reconstruction moving around (e.g. an appearance of the holographic reconstruction "jumping around" may be substantially minimised).

As used herein, the second pixel "neighbouring" the first pixel means that the first pixel and second pixel are near to one another. In some examples, the first pixel may be no more than five pixels away from the second pixel (i.e. there may be no more than five pixels between the first pixel and the second pixel). In some examples, the first pixel may be no more than one, two, three of four pixels away from the second pixel. In some examples, the first pixel may be immediately adjacent to the second pixel. The first and second pixels may be neighbouring in a direction substantially along the first dimension. In other words, the second pixel of the second holographic reconstruction may be closer to the first detection area than the first pixel of the first holographic reconstruction in the first dimension.

In some embodiments, the detector arrangement is further arranged to detect light received by a second detection area. In other words, the detector arrangement may comprise a first detection area and a second detection area that is different to the first detection area. The first and second detection areas may be spatially separated. The detector arrangement may comprise a photodiode. The photodiode may be a quadrant photodiode, wherein each active area of the quadrant photodiode can be used to detect light, thus increasing the accuracy of the light detection and therefore the optical alignment process.

In some embodiments, the optical alignment process further comprises selecting a third pixel of the array of pixels. Optionally, the third pixel is selected at the same time as the first pixel of the array of pixels is selected.

In some embodiments, the first picture further comprises a secondary control region comprising the selected third pixel. The secondary control region of the first picture may be a referred first secondary control region. The (first) primary control region may be spatially separated from the (first) secondary control region. The holographic projection system may be arranged such that light from the primary control region and the secondary control region may not be receivable at a viewing system / eye-box of the holographic projection system. In other words, a user of the holographic projection system (at the viewing window / eye-box) may not be able to view the primary and secondary control regions.

In some embodiments, the first picture comprises a picture content region. The picture content region may be spatially separated from the (first) primary control region and, if present, the (first) secondary control region. Light forming the holographic reconstruction of the picture content region (in the holographic reconstruction of the first picture) may be receivable at the viewing window / eye-box of the holographic projection system. In other words, the picture content region may comprise content intended to be viewable by the user. In some embodiments, the second picture comprises a picture content region. The picture content region of the second picture may take a corresponding form to the picture content region of the first picture. In other words, the picture content region of the first and second pictures may have substantially the same shape and may appear in substantially the same place. The picture content region of the second picture may be referred to as the second picture content region. Picture content of the first picture content region may be the same or different to picture content of the second picture content region.

In some embodiments, the optical alignment process further comprises detecting, at the plurality of positions of the first holographic reconstruction, a parameter of the light received by the second detection area. In some embodiments, the optical alignment process further comprises comparing the detected parameter to a (or the) threshold condition. The threshold condition for the parameter of the light received by the second detection area may be the same threshold condition as for the parameter of the light received by the first detection area. So, the first scan may involve detecting the parameter of the light received by the first and second detection areas simultaneously.

In some embodiments, a distance from the first pixel to a centre of the array of pixels in the first dimension may be equal (in magnitude) to a distance from the third pixel to the centre of the array of pixels (and likewise in the second dimension).

In some embodiments, the holographic projection system is arranged to determine a first aligned position of a holographic reconstruction of the first primary control region based on the threshold condition being met by the detected parameter of the light received by the first detection area. In some embodiments, the holographic projection system is arranged to determine a second aligned position of a holographic reconstruction of the first secondary control region based on the threshold condition being met by the detected parameter of the light received by the second detection area. However, as above, during the first scan, the threshold condition may not be met. The threshold condition may not be met for either the first or second detection area. Thus, the threshold condition may only be met during a second scan (or an even further scan, such as a third or fourth scan).

In some embodiments, the holographic projection system is arranged to determine an average related to the first and second aligned positions. As described above, this averaging may allow for scaling effects (caused by wavelength changes) to be cancelled out. The average could be an average of the position of the first and second aligned positions, or an average of a grating function used to achieve the first and second aligned position. The average could be a weighted average if the first and third pixels are not equally spaced from the centre of the picture. The weighting of each of the first and third pixels may be determined depending on the distance of the respective first and third pixels from the centre of the picture / replay plane. This may be because the scaling of the pixels of the holographic reconstruction (caused by changes in the wavelength of the light used to form the holographic reconstruction) is spatially varying, and may spatially vary such that the displacement of each pixel is larger the further the respective pixel is from the centre of the picture / replay plane.

In some embodiments, the repeated optical alignment process comprises selecting a fourth pixel of the array of pixels that neighbours the second pixel; and wherein the second picture further comprises a second secondary control region comprising the selected fourth pixel.

In some embodiments, the optical alignment process further comprises detecting, at the plurality of positions of the second holographic reconstruction, a parameter of the light received by the second detection area and comparing the detected parameter to a (or the) threshold condition.

In some embodiments, the first pixel neighbours the third pixel in a first direction of the first dimension, and the second pixel neighbours the fourth pixel in a second direction of the first dimension. In some embodiments, the first direction is opposite to the second direction. This may be the case when the first pixel is on an opposite side of the centre of the picture / replay field of the holographic projection system to the second pixel.

In some embodiments, the optical alignment process further comprises receiving (or selecting or forming) the first picture based on the selected first pixel, and then forming the first holographic reconstruction.

In some embodiments, the repeated optical alignment process further comprises moving (translating / scanning) the second holographic reconstruction with respect to the first detection area in the first dimension of the replay. This may be referred to herein as performing a second scan. The first and second scan may comprise moving the first and second holographic reconstruction in first and second directions of the first dimension, for example, in turn. Thus, the first and second scans may be centered on an initial position of the respective holographic reconstruction and then may be moved in the first direction and then back along the first dimension in the second direction, over the respective scan range.

In some embodiments, the repeated optical alignment process further comprises detecting, at a plurality of positions of the second holographic reconstruction, a parameter of the light received by the first detection area and comparing the detected parameter to the threshold condition. In some embodiments, the holographic projection system is arranged to determine an aligned position of a holographic reconstruction of the first primary control region based on the threshold condition being met by the detected parameter of the light received by the first detection area. This may be in the first scan or the second scan. The holographic projection system may be arranged to determine the aligned position based on the position (of the plurality of positions of the respective scan) of the respective holographic reconstruction which gives rise to the greatest detected parameter (e.g. optical power). In other words, the aligned position may be based on detected peak in the optical power as the respective holographic reconstruction is moved / scanned.

In some embodiments, the holographic projection system is arranged to move the first holographic reconstruction in the first dimension a total distance that is less than or equal to a (expected) pixel pitch of the first holographic reconstruction. In other words, the scan range may be less than or equal to an expected pixel pitch of the first holographic reconstruction. Thus, if the scan is centered on the first position of the first holographic reconstruction, the scan may comprise moving the first holographic reconstruction no more than half a pixel pitch in the first direction (from the first position) and no more than half a pixel pitch in the second direction (from the first position). In some embodiments, the holographic projection system is also arranged to move the second holographic reconstruction in the first dimension a total distance that is less than or equal to a (expected) pixel pitch of the second holographic reconstruction. In some embodiments, the holographic projection system may be arranged such that the first and / or second scan has a scan range of less than 1 millimeter, optionally less than 0.5 millimeter. The scan range (measured in millimeter) may be refer to scan range at the replay plane (adjacent to the detection areas of the detector). Such scan ranges may advantageously not be perceptible to a user of the holographic projection system (or, at least, may not adversely affect the viewing experience).

In some embodiments, the holographic projection system comprises a display device arranged to display a diffractive pattern comprising a hologram of the respective picture and to spatially modulate light incident thereon in accordance with the diffractive pattern to form a holographic wavefront. The hologram may be a computer-generated hologram of the respective picture.

In some embodiments, the holographic projection system is arranged such that a diffractive pattern comprising a first hologram of the first picture is displayed on the display device during the step of forming the first holographic reconstruction of the first picture. The holographic projection system may further be arranged such the diffractive pattern further comprises a grating function (or phase-ramp function), and wherein the holographic projection system is arranged to change the grating function of the diffractive pattern to move the first holographic reconstruction (on the replay plane). The holographic projection system (e.g. holographic controller) may be arranged to change the grating function of the diffraction pattern to move the first holographic reconstruction between the plurality of positions. There may be a grating function associated with each of the plurality of positions. The holographic projection system may be arranged to determine the grating function which gives rise to the greatest detected parameter (e.g. optical power).

Grating functions (or phase-ramp functions) can be calculated to provide a range of displacements with high accuracy (e.g. a sub-pixel accuracy). The displacement may be linear displacement in the first dimension (when a scan in the first dimension is performed) or linear displacement in a second dimension (when a scan in second dimension is performed). The diffractive pattern displayed on the display device may comprise a grating function / phase-ramp combined with the respective hologram by addition or superposition. Two perpendicular grating functions may be individually added to a hologram component and individually modified to fine-tune the position of the light encoded with the respective hologram. Reference is made throughout this disclosure to a "grating function" (or "phase-ramp function") by way of example only of a function that provides a linear translation of the holographic image or replay field. That is, an array of light modulation values which, when added to the hologram, linearly displaces the replay field by a defined magnitude and direction. The displacement may be measured in pixels, millimetres or degrees. The phase-ramp may also be referred to as a phase-wedge. The phase values of the phase-ramp may be wrapped (e.g. modulo $2\pi$). A wrapped phase-ramp may be considered a phase grating. However, the present disclosure is not limited "grating function", and the terms "software grating" and "blazed grating" may be used as examples of a beam steering function such as a wrapped modulation ramp. A grating function or phase-ramp may be charac-

The optical alignment process described above is used to align a holographic reconstruction in the first dimension. For example, a grating function is determined based on a position at which the parameter (e.g. optical) power is greatest as the respective first or second holographic reconstruction is scanned in the first dimension. In some embodiments, the holographic reconstruction is arranged to perform an optical alignment process in the second dimension. For example, the optical alignment process in the second dimension may comprise selecting a pixel of the array of pixels. The pixel may be the first pixel or may be a (different) fifth pixel. The optical alignment process may further comprise forming a third holographic reconstruction at the replay plane of a third picture. The picture may comprise a (third) primary control region comprising the (first or fifth) pixel. The optical alignment process may further comprise moving the third holographic reconstruction with respect to the first detection area in the second dimension of the replay plane such that the third holographic reconstruction is moved between a plurality of position. In other words, the holographic projection system may be arranged to perform a third scan. Unlike the first and second scan, the third scan may be in the second dimension (which is different to the first scan). The movement of the third holographic reconstruction may be achieved by the holographic projection system being arranged to display diffractive structures comprising different grating functions (in combination with a computer-generated hologram of the third picture). The optical alignment process may further comprise determining a value for a parameter of the light received by the first detection area in each of the plurality of positions. The optical alignment process may further comprise comparing each respective determined parameter value to a threshold condition. If the threshold condition is not met over (e.g. any or each of) the plurality of positions (of the third holographic reconstruction), the holographic projection system may arranged to repeat the optical alignment process by selecting a sixth pixel of the array of pixels that neighbours the third pixel; and forming a fourth holographic reconstruction (at the replay plane) of a second picture, the second picture comprising a fourth primary control region (different to the third) comprising the sixth pixel.

In some embodiments, the holographic projection system further comprises a mask comprising an aperture. The first detection area may be arranged to detect light received through the aperture of the mask. The mask may be upstream of the light receiving surface such as immediately in front of the light receiving surface. In some embodiments, the width of the aperture in the first dimension may be less than a dimension (e.g. width) of the first pixel in the first dimension. In other words, the aperture may be described as having a sub-pixel width. The presence of such a mask may improve the accuracy of the optical alignment process. In particular, a mask having sub-pixel width may enable sub-pixel accuracy in the detection of an aligned position of the respective holographic reconstruction. In some embodiments, the aperture in the mask comprises an elongated slit extending in a second dimension that is different to the first dimension. This elongated slit may be suitable for a first scan which, as above, may be performed in a first dimension. The second dimension (in which the elongated slit is elongated) may be perpendicular to the first dimension.

In some embodiments, the elongate slit of the aperture is first elongated slit. In some embodiments, aperture comprises a first elongated slit and a second elongated slit. The first and second elongated slits may coincide with one another such that the aperture forms a cross-shape. The second elongated slit may extend / be elongated in in the first dimension. Thus, the second elongated slight may be suitable for a scan which is performed in the second direction.

In a second aspect, there is provided a holographic projection system for forming, at a replay plane, a (pixelated) holographic reconstruction of a picture comprising an array of pixels (or image points). The system comprises a detector arrangement arranged to detect light received by a first detection area and a second detection area. In other words, the detector arrangement comprises first and second detection areas. The holographic projection system is arranged to perform an optical alignment process. The optical alignment process comprises selecting a first pixel of the array of pixels and a third pixel of the array of pixels. The optical alignment process further comprises forming a first holographic reconstruction (at the replay plane) of a first picture. The first picture comprises a primary control region comprising the selected first pixel and a secondary control region comprising the selected second pixel. The optical alignment process further comprises moving (translating / scanning) the first holographic reconstruction with respect to the first and second detection areas in a first dimension of the replay plane such that the first holographic reconstruction is moved between a plurality of positions. The optical alignment process further comprises determining a value for a parameter of the light received by the first detection area and a value for a corresponding parameter of the light received by the second detection area in each of the plurality of positions (based on signals received from the first detection area) and comparing each respective determined parameter value to a threshold condition. If the threshold condition is not met over (e.g. any or each of) the plurality of positions (of the first holographic reconstruction), the holographic projection system is arranged to repeat the optical alignment process by: selecting a third pixel of the array of pixels that neighbours the first pixel and selecting a fourth pixel of the array of pixels that neighbours the second pixel. The optical alignment process further comprises forming a second holographic reconstruction (at the replay plane) of a second picture, the second picture comprising a first control region comprising the third pixel and a second control region comprising the fourth pixel.

In a third aspect, there is provided a method of optical alignment such as an optical alignment method for a holographic projection system arranged to form a holographic reconstruction of a picture comprising an array of pixels. The holographic projection system may be a holographic projection system as defined in the first or second aspect. The method comprises: selecting a first pixel of the array of pixels; forming a first holographic reconstruction (at the replay plane) of a first picture, the first picture comprising a first primary control region comprising the selected first pixel; moving (translating / scanning) the first holographic reconstruction with respect to the first detection area in a first dimension of the replay plane such that the first holographic reconstruction is moved between a plurality of positions; and determining a value for a parameter of the light received by a first detection area of a detector of the holographic projection system in each of the plurality of positions (based on signals received from the first detection area) and comparing each respective determined parameter value to a threshold condition, If the threshold condition is not met over (e.g. any or each of) the plurality of positions (of the first holographic reconstruction), the method comprises repeating the optical alignment process by: selecting a second pixel of the array of pixels that neighbours the first pixel; and forming a second holographic reconstruction (at the replay plane) of a second picture, the second picture comprising a second primary control region (different to the first) comprising the second pixel.

Features or advantages described in relation to one aspect may be equally applicable to other aspects. In particular, features or advantages described in relation to the first aspect may be applicable to the second or third aspect.

In the present disclosure, the term "replica" is merely used to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. It may therefore be said that a plurality of replicas of the hologram are formed. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer. The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude and phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to $2\pi$) which represents the amount of phase retardation provided by that pixel. For example, a pixel of the spatial light modulator described as having a phase value of rr/2 will retard the phase of received light by $\pi/2$ radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

BRIEF DESCRIPTION OF THE DRAWINGS

Specific embodiments are described by way of example only with reference to the following figures:

Figure 1 is a schematic showing a reflective SLM producing a holographic reconstruction on a screen;
Figure 2A illustrates a first iteration of an example Gerchberg-Saxton type algorithm;
Figure 2B illustrates the second and subsequent iterations of the example Gerchberg-Saxton type algorithm;
Figure 2C illustrates alternative second and subsequent iterations of the example Gerchberg-Saxton type algorithm;
Figure 3 is a schematic of a reflective LCOS SLM;
Figure 4 shows an example HUD in a vehicle;
Figure 5 is a schematic view of a holographic reconstruction formed by a spatial light modulator displaying a diffractive pattern;
Figure 6 is a schematic view showing a translation of the holographic reconstruction formed by a spatial light modulator resulting from a change in the tilt of the spatial light modulator;
Figure 7 is a schematic view of the pixels of the holographic reconstruction of Figure 6;
Figure 8 is a schematic view showing a scaling of the holographic reconstruction formed by a spatial light modulator resulting from a change in wavelength of light incident on the spatial light modulator;
Figure 9 is a schematic view of the pixels of the holographic reconstruction of Figure 8;
Figure 10 illustrates movement of image regions for the arrangements shown in Figures 6 and 8;
Figure 11 illustrates an arrangement in which the holographic reconstruction comprises a primary and a second control region and first and second masks;
Figure 12A illustrates a step of an optical alignment process comprising moving the holographic reconstruction such that the primary control region is moved with respect to the first mask;
Figure 12B illustrates an optical power measured as the holographic reconstruction is moved in the way illustrated in Figure 12A;

Figure 13A illustrates a step of an optical alignment process comprising moving the holographic reconstruction such that the secondary control region is moved with respect to the second mask;

Figure 13B illustrates an optical power measured as the holographic reconstruction is moved in the way illustrated in Figure 13A;

Figure 14 illustrates determining an average misalignment of the primary and secondary control regions based on optical power peaks detected in Figures 12B and 13B;

Figure 15A illustrates the re-selection of a pixel forming the primary control region;

Figure 15B illustrates the re-selection of a pixel forming the secondary control region;

Figure 16A illustrates the pixel of a holographic reconstruction of a first picture forming a first primary control region;

Figure 16B illustrates the pixel of a holographic reconstruction of a second picture forming a second primary control region, in which the pixel of the holographic reconstruction of the second picture has been re-selected as shown in Figure 15A; and

Figure 17 is a flow chart of a method of performing an optical alignment process according to present disclosure.

The same reference numbers will be used throughout the drawings to refer to the same or like parts.

DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

Optical configuration

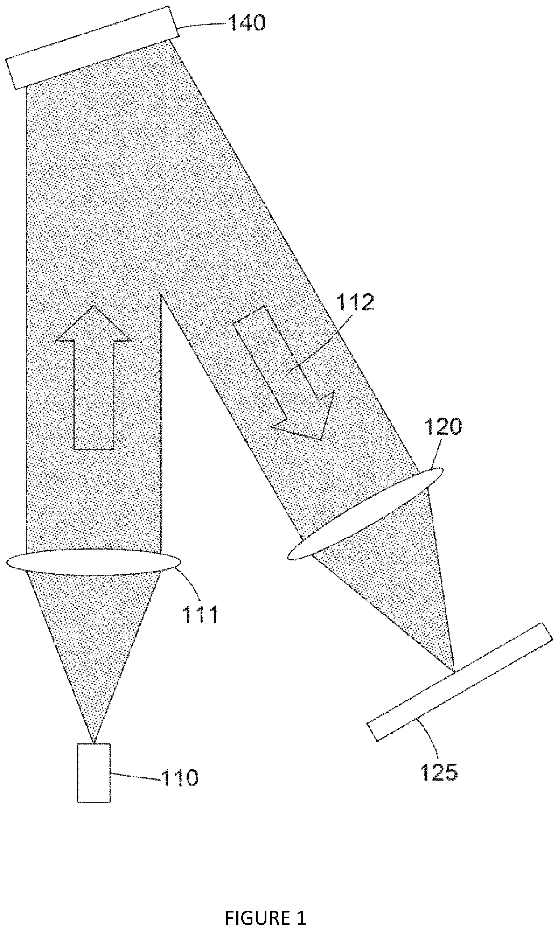

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is not a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform.

Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms.

A Fourier transform hologram may be calculated using an algorithm such as the Gerchberg-Saxton algorithm. Furthermore, the Gerchberg-Saxton algorithm may be used to calculate a hologram in the Fourier domain (i.e. a Fourier transform hologram) from amplitude-only information in the spatial domain (such as a photograph). The phase information related to the object is effectively "retrieved" from the amplitude-only information in the spatial domain. In some embodiments, a computer-generated hologram is calculated from amplitude-only information using the Gerchberg-Saxton algorithm or a variation thereof.

The Gerchberg Saxton algorithm considers the situation when intensity cross-sections of a light beam, IA(x, y) and IB(x, y), in the planes A and B respectively, are known and IA(x, y) and IB(x, y) are related by a single Fourier transform. With the given intensity cross-sections, an approximation to the phase distribution in the planes A and B, ΨA(x, y) and ΨB(x, y) respectively, is found. The Gerchberg-Saxton algorithm finds solutions to this problem by following an iterative process. More specifically, the Gerchberg-Saxton algorithm iteratively applies spatial and spectral constraints while repeatedly transferring a data set (amplitude and phase), representative of IA(x, y) and IB(x, y), between the spatial domain and the Fourier (spectral or frequency) domain. The corresponding computer-generated hologram in the spectral domain is obtained through at least one iteration of the algorithm. The algorithm is convergent and arranged to produce a hologram representing an input image. The hologram may be an amplitude-only hologram, a phase-only hologram or a fully complex hologram.

In some embodiments, a phase-only hologram is calculated using an algorithm based on the Gerchberg-Saxton algorithm such as described in British patent 2,498,170 or 2,501,112 which are hereby incorporated in their entirety by reference. However, embodiments disclosed herein describe calculating a phase-only hologram by way of example only. In these embodiments, the Gerchberg-Saxton algorithm retrieves the phase information Ψ [u, v] of the Fourier transform of the data set which gives rise to a known amplitude information T[x, y], wherein the amplitude information T[x, y] is representative of a target picture (e.g. a photograph). Since the magnitude and phase are intrinsically combined in the Fourier transform, the transformed magnitude and phase contain useful information about the accuracy of the calculated data set. Thus, the algorithm may be used iteratively with feedback on both the amplitude and the phase information. However, in these embodiments, only the phase information Ψ[u, v] is used as the hologram to form a holographic representative of the target picture at an image plane. The hologram is a data set (e.g. 2D array) of phase values.

In other embodiments, an algorithm based on the Gerchberg-Saxton algorithm is used to calculate a fully-complex hologram. A fully-complex hologram is a hologram having a magnitude component and a phase component. The hologram is a data set (e.g. 2D array) comprising an array of complex data values wherein each complex data value comprises a magnitude component and a phase component.

In some embodiments, the algorithm processes complex data and the Fourier transforms are complex Fourier transforms. Complex data may be considered as comprising (i) a real component and an imaginary component or (ii) a magnitude component and a phase component. In some embodiments, the two components of the complex data are processed differently at various stages of the algorithm.

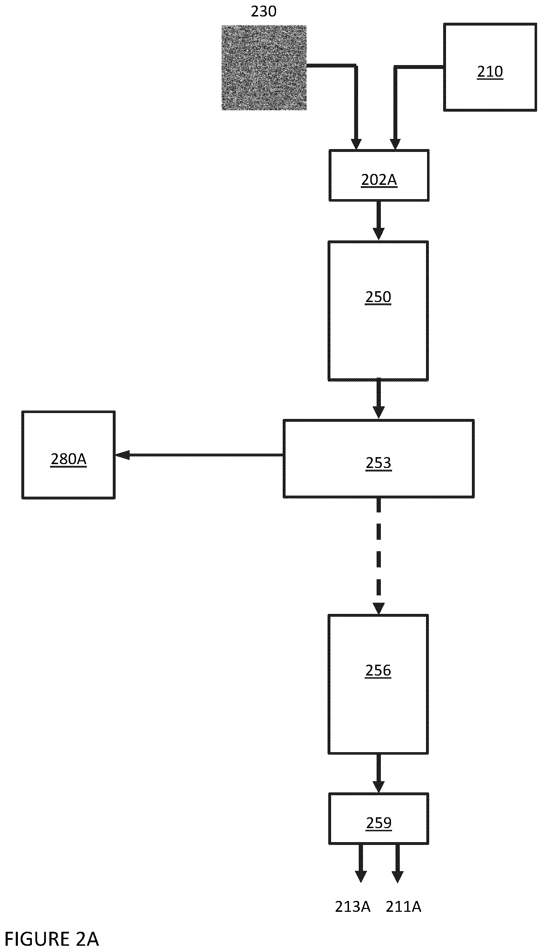

Figure 2A illustrates the first iteration of an algorithm in accordance with some embodiments for calculating a phase-only hologram. The input to the algorithm is an input image 210 comprising a 2D array of pixels or data values, wherein each pixel or data value is a magnitude, or amplitude, value. That is, each pixel or data value of the input image 210 does not have a phase component. The input image 210 may therefore be considered a magnitude-only or amplitude-only or intensity-only distribution. An example of such an input image 210 is a photograph or one frame of video comprising a temporal sequence of frames. The first iteration of the algorithm starts with a data forming step 202A comprising assigning a random phase value to each pixel of the input image, using a random phase distribution (or random phase seed) 230, to form a starting complex data set wherein each data element of the set comprising magnitude and phase. It may be said that the starting complex data set is representative of the input image in the spatial domain.

First processing block 250 receives the starting complex data set and performs a complex Fourier transform to form a Fourier transformed complex data set. Second processing block 253 receives the Fourier transformed complex data set and outputs a hologram 280A. In some embodiments, the hologram 280A is a phase-only hologram. In these embodiments, second processing block 253 quantises each phase value and sets each amplitude value to unity in order to form hologram 280A.

Each phase value is quantised in accordance with the phase-levels which may be represented on the pixels of the spatial light modulator which will be used to "display" the phase-only hologram. For example, if each pixel of the spatial light modulator provides 256 different phase levels, each phase value of the hologram is quantised into one phase level of the 256 possible phase levels. Hologram 280A is a phase-only Fourier hologram which is representative of an input image. In other embodiments, the hologram 280A is a fully complex hologram comprising an array of complex data values (each including an amplitude component and a phase component) derived from the received Fourier transformed complex data set. In some embodiments, second processing block 253 constrains each complex data value to one of a plurality of allowable complex modulation levels to form hologram 280A. The step of constraining may include setting each complex data value to the nearest allowable complex modulation level in the complex plane. It may be said that hologram 280A is representative of the input image in the spectral or Fourier or frequency domain. In some embodiments, the algorithm stops at this point.

However, in other embodiments, the algorithm continues as represented by the dotted arrow in Figure 2A. In other words, the steps which follow the dotted arrow in Figure 2A are optional (i.e. not essential to all embodiments).

Third processing block 256 receives the modified complex data set from the second processing block 253 and performs an inverse Fourier transform to form an inverse Fourier transformed complex data set. It may be said that the inverse Fourier transformed complex data set is representative of the input image in the spatial domain.

Fourth processing block 259 receives the inverse Fourier transformed complex data set and extracts the distribution of magnitude values 211A and the distribution of phase values 213A. Optionally, the fourth processing block 259 assesses the distribution of magnitude values 211A. Specifically, the fourth processing block 259 may compare the distribution of magnitude values 211A of the inverse Fourier transformed complex data set with the input image 510 which is itself, of course, a distribution of magnitude values. If the difference between the distribution of magnitude values 211A and the input image 210 is sufficiently small, the fourth processing block 259 may determine that the hologram 280A is acceptable. That is, if the difference between the distribution of magnitude values 211A and the input image 210 is sufficiently small, the fourth processing block 259 may determine that the hologram 280A is a sufficiently-accurate representative of the input image 210. In some embodiments, the distribution of phase values 213A of the inverse Fourier transformed complex data set is ignored for the purpose of the comparison. It will be appreciated that any number of different methods for comparing the distribution of magnitude values 211A and the input image 210 may be employed and the present disclosure is not limited to any particular method. In some embodiments, a mean square difference is calculated and if the mean square difference is less than a threshold value, the hologram 280A is deemed acceptable. If the fourth processing block 259 determines that the hologram 280A is not acceptable, a further iteration of the algorithm may be performed. However, this comparison step is not essential and in other embodiments, the number of iterations of the algorithm performed is predetermined or preset or user-defined.

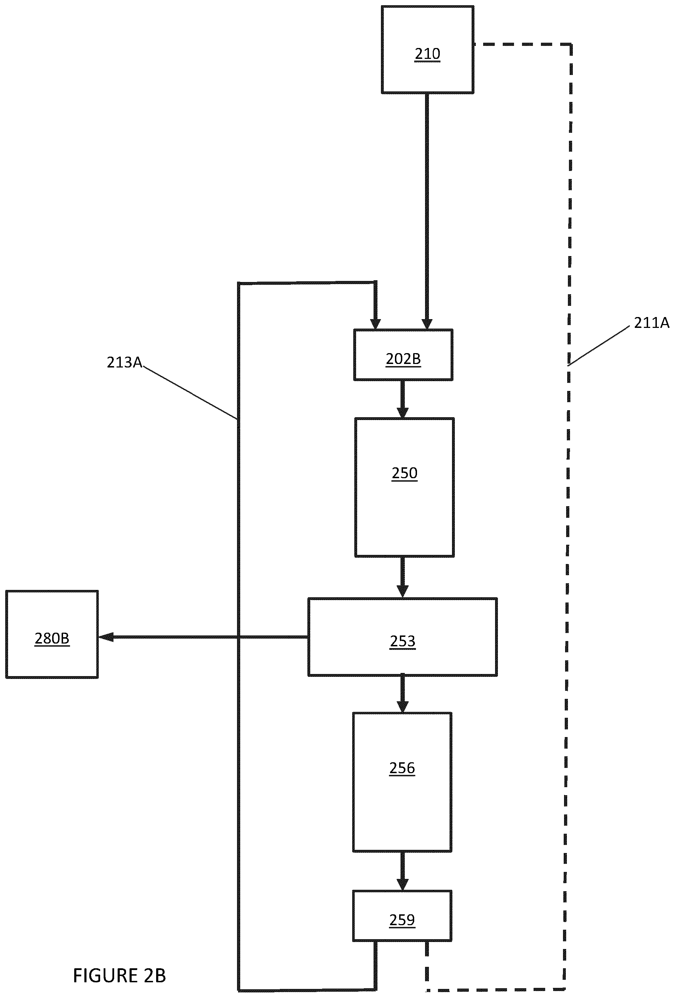

Figure 2B represents a second iteration of the algorithm and any further iterations of the algorithm. The distribution of phase values 213A of the preceding iteration is fed-back through the processing blocks of the algorithm. The distribution of magnitude values 211A is rejected in favour of the distribution of magnitude values of the input image 210. In the first iteration, the data forming step 202A formed the first complex data set by combining distribution of magnitude values of the input image 210 with a random phase distribution 230. However, in the second and subsequent iterations, the data forming step 202B comprises forming a complex data set by combining (i) the distribution of phase values 213A from the previous iteration of the algorithm with (ii) the distribution of magnitude values of the input image 210.

The complex data set formed by the data forming step 202B of Figure 2B is then processed in the same way described with reference to Figure 2A to form second iteration hologram 280B. The explanation of the process is not therefore repeated here. The algorithm may stop when the second iteration hologram 280B has been calculated. However, any number of further iterations of the algorithm may be performed. It will be understood that the third processing block 256 is only required if the fourth processing block 259 is required or a further iteration is required. The output hologram 280B generally gets better with each iteration. However, in practice, a point is usually reached at which no measurable improvement is observed or the positive benefit of performing a further iteration is out-weighted by the negative effect of additional processing time. Hence, the algorithm is described as iterative and convergent.

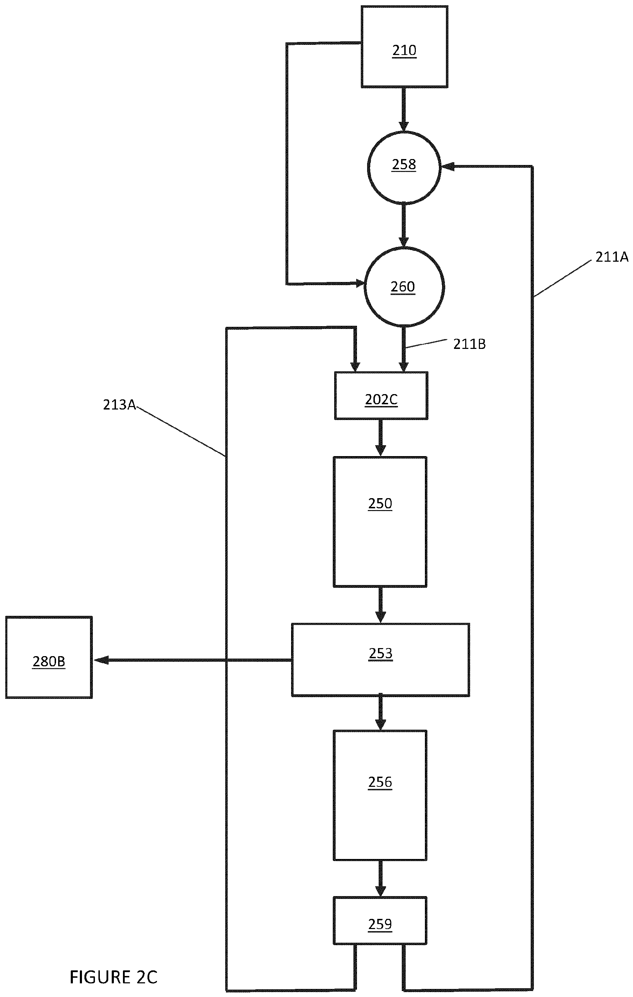

Figure 2C represents an alternative embodiment of the second and subsequent iterations. The distribution of phase values 213A of the preceding iteration is fed-back through the processing blocks of the algorithm. The distribution of magnitude values 211A is rejected in favour of an alternative distribution of magnitude values. In this alternative embodiment, the alternative distribution of magnitude values is derived from the distribution of magnitude values 211 of the previous iteration. Specifically, processing block 258 subtracts the distribution of magnitude values of the input image 210 from the distribution of magnitude values 211 of the previous iteration, scales that difference by a gain factor $\alpha$ and subtracts the scaled difference from the input image 210. This is expressed mathematically by the following equations, wherein the subscript text and numbers indicate the iteration number:

$$R_{n+1}[x, y] = F'\{\exp(i\,\psi_n[u,v])\}$$

$$\psi_n[u,v] = \angle F\{\eta \cdot \exp(i\angle R_n[x, y])\}$$

$$\eta = T[x, y] - \alpha(|R_n[x, y]| - T[x, y])$$

where:

F' is the inverse Fourier transform;
F is the forward Fourier transform;
R[x, y] is the complex data set output by the third processing block 256;
T[x, y] is the input or target picture;
$\angle$ is the phase component;
$\Psi$ is the phase-only hologram 280B;
$\eta$ is the new distribution of magnitude values 211B; and
$\alpha$ is the gain factor.

The gain factor $\alpha$ may be fixed or variable. In some embodiments, the gain factor $\alpha$ is determined based on the size and rate of the incoming target picture data. In some embodiments, the gain factor $\alpha$ is dependent on the iteration number. In some embodiments, the gain factor $\alpha$ is solely function of the iteration number.

The embodiment of Figure 2C is the same as that of Figure 2A and Figure 2B in all other respects. It may be said that the phase-only hologram $\Psi$(u, v) comprises a phase distribution in the frequency or Fourier domain.

In some embodiments, the Fourier transform is performed using the spatial light modulator. Specifically, the hologram data is combined with second data providing optical power. That is, the data written to the spatial light modulation comprises hologram data representing the object and lens data representative of a lens. When displayed on a spatial light modulator and illuminated with light, the lens data emulates a physical lens - that is, it brings light to a focus in the same way as the corresponding physical optic. The lens data therefore provides optical, or focusing, power. In these embodiments, the physical Fourier transform lens 120 of Figure 1 may be omitted. It is known in the field of computer-generated holography how to calculate data representative of a lens. The data representative of a lens may be referred to as a software lens. For example, a phase-only lens may be formed by calculating the phase delay caused by each point of the lens owing to its refractive index and spatially-variant optical path length. For example, the optical path length at the centre of a convex lens is greater than the optical path length at the edges of the lens. An amplitude-only lens may be formed by a Fresnel zone plate. It is also known in the art of computer-generated holography how to combine data representative of a lens with a hologram so that a Fourier transform of the hologram can be performed without the need for a physical Fourier lens. In some embodiments, lensing data is combined with the hologram by simple addition such as simple vector addition. In some embodiments, a physical lens is used in conjunction with a software lens to perform the Fourier transform. Alternatively, in other embodiments, the Fourier transform lens is omitted altogether such that the holographic reconstruction takes place in the far-field. In further embodiments, the hologram may be combined in the same way with grating data - that is, data arranged to perform the function of a grating such as beam steering. Again, it is known in the field of computer-generated holography how to calculate such data. For example, a phase-only grating may be formed by modelling the phase delay caused by each point on the surface of a blazed grating. An amplitude-only grating may be simply superimposed with an amplitude-only hologram to provide angular steering of the holographic reconstruction.

In some embodiments, the Fourier transform is performed jointly by a physical Fourier transform lens and a software lens. That is, some optical power which contributes to the Fourier transform is provided by a software lens and the rest of the optical power which contributes to the Fourier transform is provided by a physical optic or optics.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

Embodiments relate to Fourier holography and Gerchberg-Saxton type algorithms by way of example only. The present disclosure is equally applicable to Fresnel holography and holograms calculated by other techniques such as those based on point cloud methods.

Light modulation

A spatial light modulator may be used to display the diffractive pattern including the computer-generated hologram. If the hologram is a phase-only hologram, a spatial light modulator which modulates phase is required. If the hologram is a fully-complex hologram, a spatial light modulator which modulates phase and amplitude may be used or a first spatial light modulator which modulates phase and a second spatial light modulator which modulates amplitude may be used.

In some embodiments, the light-modulating elements (i.e. the pixels) of the spatial light modulator are cells containing liquid crystal. That is, in some embodiments, the spatial light modulator is a liquid crystal device in which the optically-active component is the liquid crystal. Each liquid crystal cell is configured to selectively-provide a plurality of light modulation levels. That is, each liquid crystal cell is configured at any one time to operate at one light modulation level selected from a plurality of possible light modulation levels. Each liquid crystal cell is dynamically-reconfigurable to a different light modulation level from the plurality of light modulation levels. In some embodiments, the spatial light modulator is a reflective liquid crystal on silicon (LCOS) spatial light modulator but the present disclosure is not restricted to this type of spatial light modulator.

A LCOS device provides a dense array of light modulating elements, or pixels, within a small aperture (e.g. a few centimetres in width). The pixels are typically approximately 10 microns or less which results in a diffraction angle of a few degrees meaning that the optical system can be compact. It is easier to adequately illuminate the small aperture of a LCOS SLM than it is the larger aperture of other liquid crystal devices. An LCOS device is typically reflective which means that the circuitry which drives the pixels of a LCOS SLM can be buried under the reflective surface. The results in a higher aperture ratio. In other words, the pixels are closely packed meaning there is very little dead space between the pixels. This is advantageous because it reduces the optical noise in the replay field. A LCOS SLM uses a silicon backplane which has the advantage that the pixels are optically flat. This is particularly important for a phase modulating device.

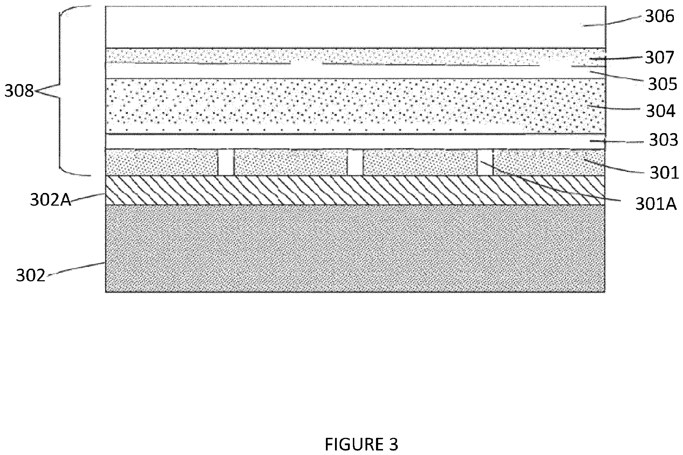

A suitable LCOS SLM is described below, by way of example only, with reference to Figure 3. An LCOS device is formed using a single crystal silicon substrate 302. It has a 2D array of square planar aluminium electrodes 301, spaced apart by a gap 301a, arranged on the upper surface of the substrate. Each of the electrodes 301 can be addressed via circuitry 302a buried in the substrate 302. Each of the electrodes forms a respective planar mirror. An alignment layer 303 is disposed on the array of electrodes, and a liquid crystal layer 304 is disposed on the alignment layer 303. A second alignment layer 305 is disposed on the planar transparent layer 306, e.g. of glass. A single transparent electrode 307 e.g. of ITO is disposed between the transparent layer 306 and the second alignment layer 305.

Each of the square electrodes 301 defines, together with the overlying region of the transparent electrode 307 and the intervening liquid crystal material, a controllable phase-modulating element 308, often referred to as a pixel. The effective pixel area, or fill factor, is the percentage of the total pixel which is optically active, taking into account the space between pixels 301a. By control of the voltage applied to each electrode 301 with respect to the transparent electrode 307, the properties of the liquid crystal material of the respective phase modulating element may be varied, thereby to provide a variable delay to light incident thereon. The effect is to provide phase-only modulation to the wavefront, i.e. no amplitude effect occurs.

The described LCOS SLM outputs spatially modulated light in reflection. Reflective LCOS SLMs have the advantage that the signal lines, gate lines and transistors are below the mirrored surface, which results in high fill factors (typically greater than 90%) and high resolutions. Another advantage of using a reflective LCOS spatial light modulator is that the liquid crystal layer can be half the thickness than would be necessary if a transmissive device were used. This greatly improves the switching speed of the liquid crystal (a key advantage for the projection of moving video images). However, the teachings of the present disclosure may equally be implemented using a transmissive LCOS SLM.

Head-up display

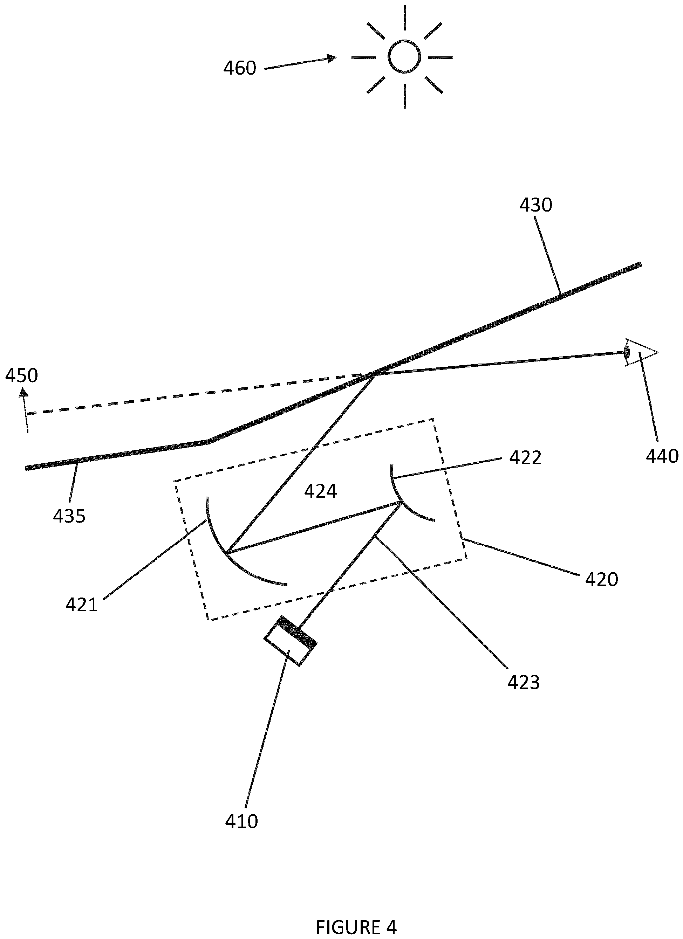

In some embodiments, there is provided a holographic projection system as part of a head-up display (or "HUD"). Figure 4 shows a HUD in a vehicle such as a car. The windscreen 430 and bonnet (or hood) 435 of the vehicle are shown in Figure 4. The HUD comprises a picture generating unit, "PGU", 410 and an optical system 420. The PGU 410 and the optical system 420 may collectively be referred to as a holographic projector.

The PGU 410 comprises a light source, a light receiving surface and a processor (or computer) arranged to computer-control the image content of the picture. The PGU 410 is arranged to generate a picture, or sequence of pictures, on the light receiving surface. The light receiving surface may be a screen or diffuser. In some embodiments, the light receiving surface is plastic (that is, made of plastic). The light receiving surface is disposed on the primary replay plane. That is, the holographic replay plane on which the images are first formed.

The optical system 420 comprises an input port, an output port, a first mirror 421 and a second mirror 422. The first mirror 421 and second mirror 422 are arranged to guide light from the input port of the optical system to the output port of the optical system. More specifically, the second mirror 442 is arranged to receive light of the picture from the PGU 410 and the first mirror 421 is arranged to receive light of the picture from the second mirror 422. The first mirror 421 is further arranged to reflect the received light of the picture to the output port. The optical path from the input port to the output port therefore comprises a first optical path 423 (or first optical path component) from the input to the second mirror 422 and a second optical path 424 (or second optical path component) from the second mirror 422 to the first mirror 421. There is, of course, a third optical path (or optical path component) from the first mirror to the output port but that is not assigned a reference numeral in Figure 4. The optical configuration shown in Figure 4 may be referred to as a "z-fold" configuration owing to the shape of the optical path.

The HUD is configured and positioned within the vehicle such that light of the picture from the output port of the optical system 420 is incident upon the windscreen 430 and at least partially reflected by the windscreen 430 to the user 440 of the HUD. Accordingly, in some embodiments, the optical system is arranged to form the virtual image of each picture in the windscreen by reflecting spatially-modulated light off the windscreen. The user 440 of the HUD (for example, the driver of the car) sees a virtual image 450 of the picture in the windscreen 430. Accordingly, in embodiments, the optical system is arranged to form a virtual image of each picture on a windscreen of the vehicle. The virtual image 450 is formed a distance down the bonnet 435 of the car. For example, the virtual image may be 1 to 2.5 metres from the user 440. The output port of the optical system 420 is aligned with an aperture in the dashboard of the car such that light of the picture is directed by the optical system 420 and windscreen 430 to the user 440. In this configuration, the windscreen 430 functions as an optical combiner. In some embodiments, the optical system is arranged to form a virtual image of each picture on an additional optical combiner which is included in the system. The windscreen 430, or additional optical combiner if included, combines light from the real world scene with light of the picture. It may therefore be understood that the HUD may provide augmented reality including a virtual image of the picture. For example, the augmented reality information may include navigation information or information related to the speed of the automotive vehicle. In some embodiments, the light forming the picture is output by incident upon the windscreen at Brewster's angle (also known as the polarising angle) or within 5 degrees of Brewster's angle such as within 2 degrees of Brewster's angle.

In some embodiments, the first mirror and second mirror are arranged to fold the optical path from the input to the output in order to increase the optical path length without overly increasing the physical size of the HUD.

The picture formed on the light receiving surface of the PGU 410 may only be a few centimetres in width and height. The light receiving surface of the PGU 410 may be the display plane of the alignment method. The first mirror 421 and second mirror 422, collectively or individually, provide magnification. That is, the first mirror and/or second mirror may have optical power (that is, dioptric or focusing power). The user 440 therefore sees a magnified virtual image 450 of the picture formed by the PGU. The first mirror 421 and second mirror 422 may also correct for optical distortions such as those caused by the windscreen 430 which typically has a complex curved shape. The folded optical path and optical power in the mirrors together allow for suitable magnification of the virtual image of the picture.

The PGU 410 of the present disclosure comprises a holographic projector and a light receiving surface such as a screen or diffuser.

Optical Misalignments

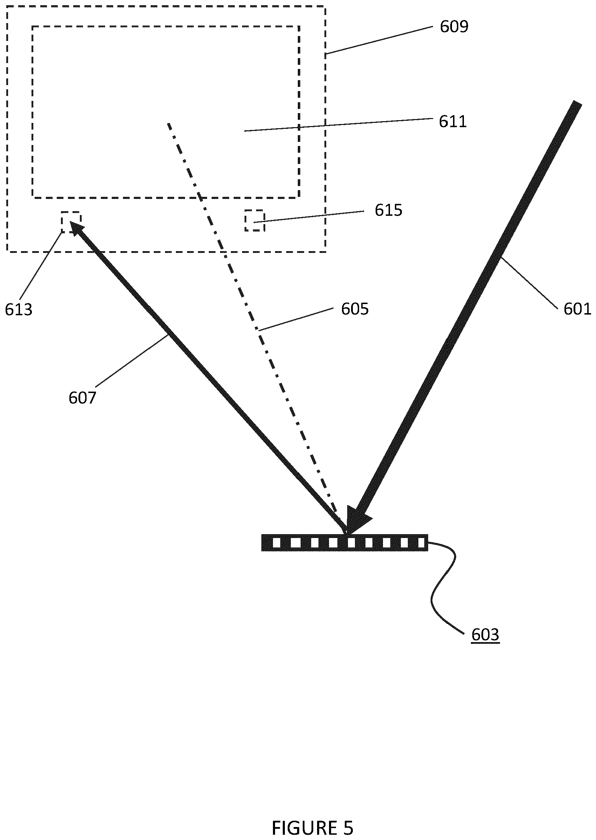

The HUD of Figure 4 is susceptible to various optical misalignments. This is explained in more detail in relation to Figures 5 to 10. The HUD comprises a processor. The PGU 410 comprises an SLM 603 which is connected or coupled to the processor of the HUD. The processor causes the SLM 603 to display a diffractive pattern comprising a computer-generated hologram (which is a hologram of a picture). The SLM 603 receives incident light having a wavelength from a light source and spatially modulates the incident light in accordance with the computer-generated hologram to form an image within a primary replay field at a replay plane 607. In this example, the light source is a laser and the incident light is a collimated beam of coherent light.

The image is a holographic reconstruction of the computer-generated hologram and is formed by diffraction. The image comprises a primary image region comprising information for a user (for example a holographic reconstruction of an original image or object represented by the computer-generated hologram displayed on the SLM 603) and primary and secondary control regions. These primary and secondary control regions are located outside of the primary image region, in a secondary image region of the replay field. The first and second control image regions comprise diffracted light formed by the displayed hologram.

In the example of Figure 5, the light in the first and second control regions can be considered as 'control spots', that is, focused spots of diffracted light located outside the primary image region for use in the control of the projection system. The image comprising the primary image region and the first and second control image regions is formed within primary replay field 619 at a replay plane. Replay field 619 has angular extent 623, centred around an optical axis 605 of the spatially modulated light output from the SLM 603. In other words, the size of the replay field 619 in which the image is formed is dependent on angle.

The system further comprises a detector arrangement. The detector arrangement is arranged to detect light travelling to or from the primary control region and light travelling to or from the secondary image region (assuming that the primary control region and the second control region are correctly aligned with the detector arrangement). The detector arrangement described herein comprises two separate detectors (e.g. a first detection region and a second detection region). The two detectors are camera arrangements, each of which monitors the amount of received light from one of the control spots (i.e. one of the control regions). For example, the two detectors determine the optical power of received light. Although any other suitable detector arrangement that can determine the amount of receive light from each control spot can be employed in corresponding embodiments.

The position of the primary and secondary control regions is dependent on a number of factors. The main factors discussed herein are: a) a physical misalignment of the SLM 603 (in particular, a tilt of the SM 603); and b) a change in wavelength of the incident light. The optical alignment process described herein is arranged to determine a). The optical alignment process described herein is arranged to determine a) while ignoring other factors affecting the position of the primary and secondary control regions (for example, while ignoring b)).

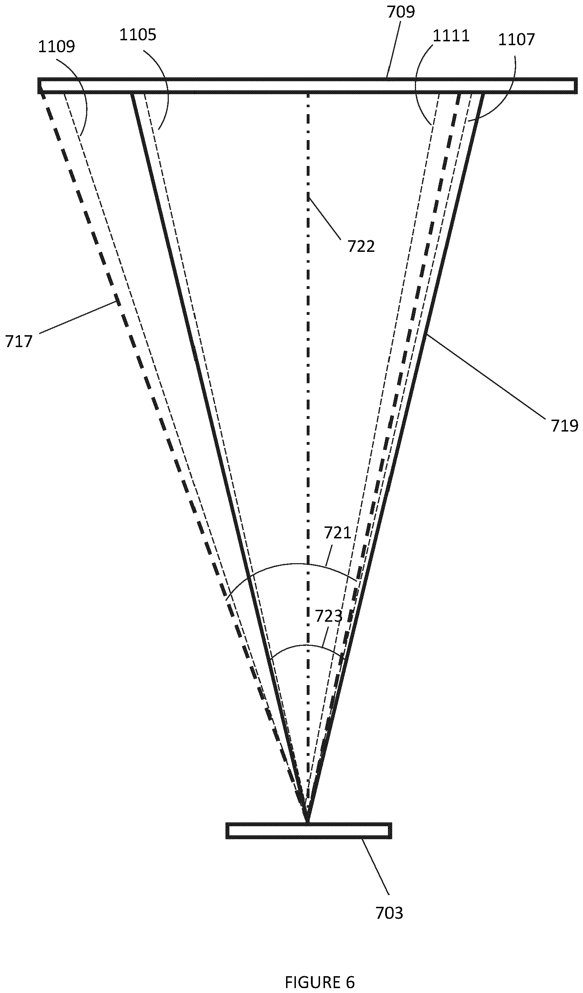

The effect of physical misalignments of the SLM (e.g. a changing tilt of the SLM) is shown in Figure 6. Such misalignments result in a translation of the replay field. For example, incident light is spatially modulated by computer-generated hologram displayed on SLM 703, as described above, to form an image at replay plane 709. The image at the replay plane 709 comprises a primary image region and primary and secondary control image regions. In this arrangement, the light in the primary and secondary image regions can again be considered as 'control spots', that is, focused spots of light located outside the primary image region. Replay field 719 has an angular extent 723, and is here centred around an optical axis 722 of the spatially modulated light output from the SLM 703. In other words, the size of the replay field 719 at the replay plane 709 is determined by angle 723.

If the SLM 703 is subjected to vibrations or changes in environmental conditions such as temperature, a mechanical translation may occur. This translation causes optical misalignments within the system and results in a shift in the replay field at the replay plane 709. In particular, the replay field containing the primary control region and secondary control region may no longer be centred around the optical axis 722, but instead may be skewed or translated relative to the optical axis 722 to form replay field 717 with angular extent 721. Angle 721 is equal to angle 723 - in other words, the image at replay plane 709 is the same size before and after the translation, it is just located at a different position in space because replay field 717 is shifted relative to replay field 719. The entire replay field has been translated, so there is no change in the relative position of the primary and secondary control regions (i.e. the separation of the two regions has not increased or decreased). The relative position of the primary and secondary control regions with respect to their respective first and second detection regions has changed. The change in relative position is the same for both primary and secondary control regions.

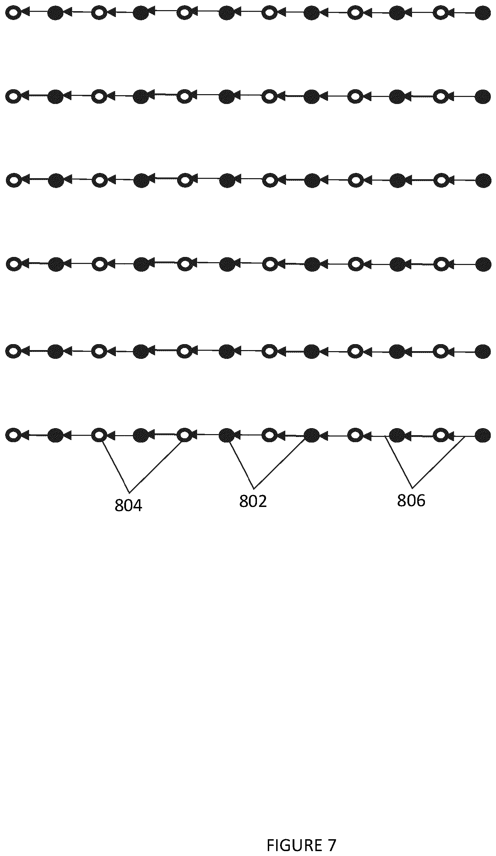

The computer-generated hologram displayed on the SLM 703 is a hologram of picture. The picture is pixellated (and, in this example, is formed of an array of pixels). Thus, the holographic reconstruction formed at the replay fields 717, 719 is also pixellated. In other words, each of primary image region and the primary and secondary control regions of Figure 6 comprise pixels. Figure 7 shows the effect of the changing tilt of the SLM 703 on the position of pixels of the holographic reconstruction. Figure 7 shows a first array of pixels 802 shown as solid black circles. The first array of pixels 802 correspond to the pixels of the holographic reconstruction formed at the replay field 719. Figure 7 shows a second array of pixels 804 shows as hollow black circles. The second array of pixels 804 correspond to pixels of the holographic reconstruction formed at the replay field 717. Because the replay field 717 is translated with respect to the replay field 719 (as a result in the change in the tilt of the SLM 703), the second array of pixels 804 are translated with respect to the first array of pixels 802. In fact, each pixel 802 of the first array is translated to form a corresponding pixel 804 in the second array. This translation is represented by arrows 806 in Figure 7. Because the entire replay field is translated on the replay field as a result of the change in tilt, each pixel 802 of the first array is translated by the same amount to form the respective pixel 804 of the second array. Thus, all the arrows 806 are equal in length in Figure 7. In other words, the same translation is experienced globally by all of the pixels.

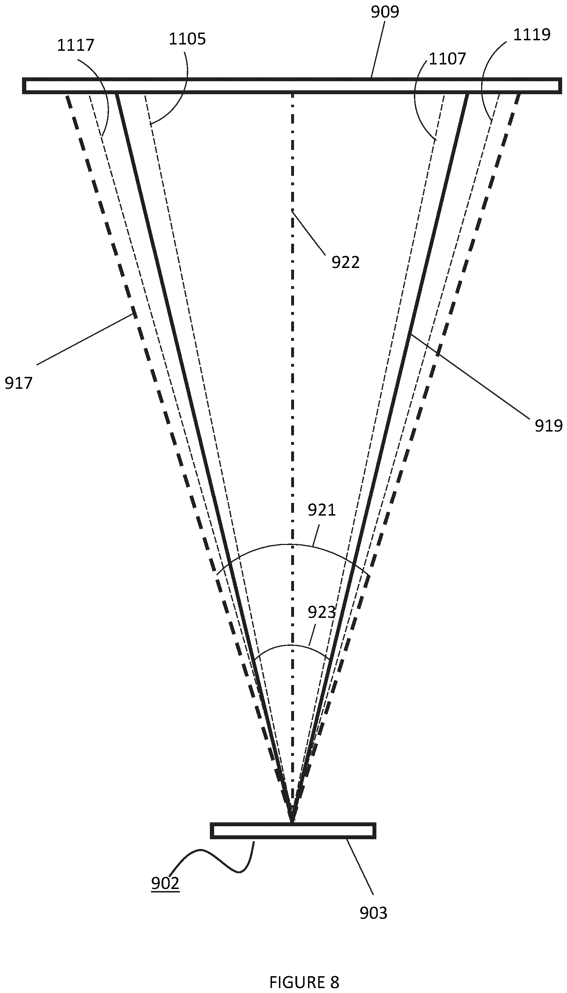

The effect of a change in the wavelength of incident light is shown in Figure 8. Such a change in wavelength causes a change in the scaling of the replay field. The extent 923 of the replay field 919 is dependent on the wavelength and the spacing of the pixels of the SLM 903 . The diffraction of the light forming the image comprising the primary and secondary control regions is diffracted in accordance with the diffractive pattern displayed on the SLM - this diffractive pattern can be just the computer-generated hologram, or a combination of the hologram and a second diffractive pattern such as a grating function component, which has a defined diffraction spacing.

For a given SLM 903 and a given diffractive pattern comprising the computer-generated hologram, a change in wavelength causes a change in the diffraction angle and thus a change in the positions of the primary and secondary control regions - i.e. when the wavelength of the incident light changes (for example due to temperature fluctuations in the laser cavity of the laser), the positions of the control regions also change. Consequently, the angular extent of the replay field containing the image comprising the first and second control image regions changes as a result of the wavelength change. For example, if the wavelength of the incident light increases, the angle of diffraction also increases, resulting in a larger replay field 917 having an angular extent 921 larger than angle 923. In other words, the change in the wavelength causes a change in the replay field size. This change in image size can be defined as follows, where L is the distance to the replay plane 909 of the optical system and $\theta$ is the diffraction angle: *image size* = 2 L tan ($\theta$).

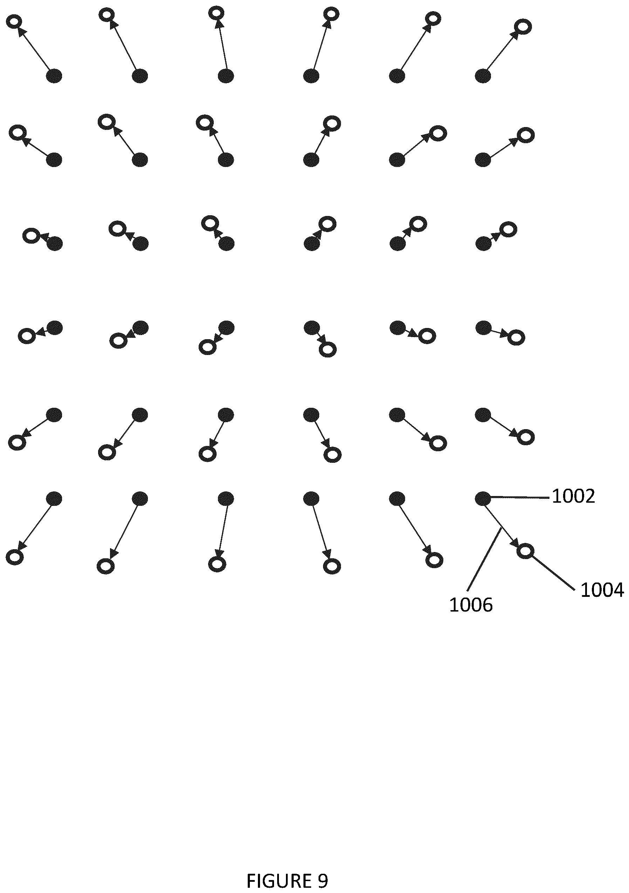

Figure 9 shows the effect of the changing wavelength on the position of pixels of the holographic reconstruction. Figure 9 shows a first array of pixels 1002 shown as solid black circles. The first array of pixels 1002 correspond to the pixels of the holographic reconstruction formed at the replay field 919. Figure 9 shows a second array of pixels 1004 shows as hollow black circles. The second array of pixels 1004 correspond to pixels of the holographic reconstruction formed at the replay field 917. Because the replay field 917 scales with respect to the replay field 919 (as a result in the change in the wavelength), the second array of pixels 1004 are scaled with respect to the first array of pixels 1002. This means that the each pixel 1002 of the first array is translated by a different amount to form a corresponding pixel 1004 in the second array. This translation is represented by arrows 1006 in Figure 9. Each arrow 1006 has an individual length and / or direction. In other words, the translation is experienced by each pixel is unique at each individual location.

Figure 7 and 9 each show a six by six array of pixels. It should be clear that this is merely exemplary. The replay field may comprise any number of pixels, and typically comprises far more pixels than a six by six array. For example, the replay field may comprise 2000 by 1000 array of pixels.

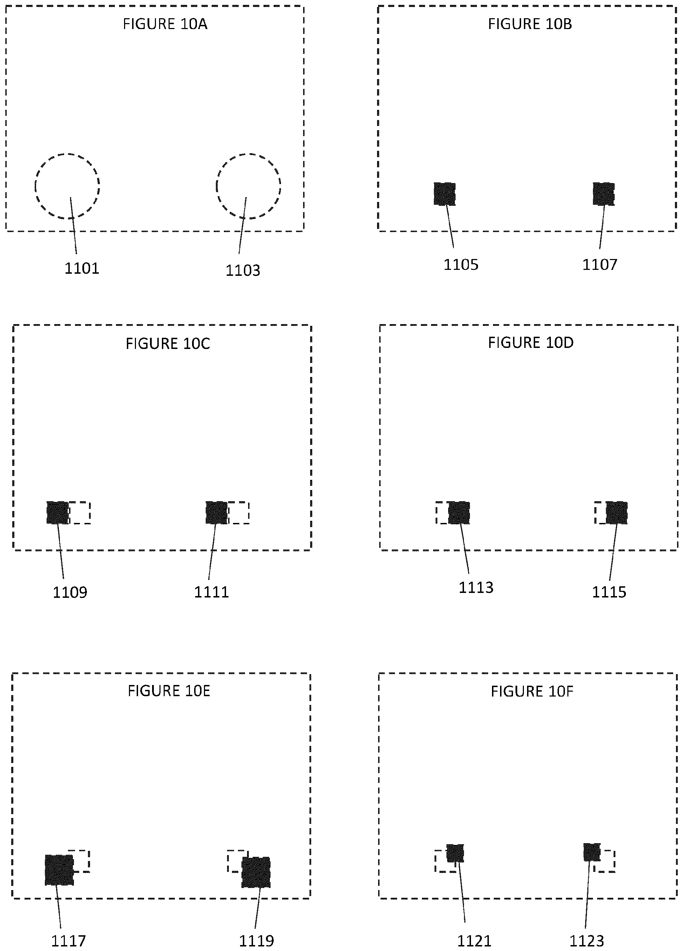

Figures 10A to 10F further demonstrate how the different factors affect the position of the primary control region and the secondary control region relative to a first or detection area, respectively. With reference to Figures 10A and 10B, the projection system comprises a detector arrangement. The detector arrangement comprises a first detector region 1101 and a second detector region 1103, said detector regions being located within the image area (i.e. area of image located at replay plane 709/909) in order to detect the light in the image control regions. Here the first detector region 1101 corresponds to a first CCD and the second detector region 1103 corresponds to a second CCD, but any other suitable detector arrangement can be employed. When the system is in optical alignment and the wavelength of the incident light from the light source is equal to the intended wavelength, the control spot of the primary control region (first control spot) is positioned at position 1105 within the first detector region 1101 and the control spot of the secondary control region (second control spot) is positioned at position 1107 within the second detector region 1103.

As described with reference to Figures 10C and 10D and shown in Figure 6, when the system is subjected to a mechanical misalignment the positions of the control spots translate equally, such that the image (for example, the image at replay plane 709) is translated. For example, there could be a tilt of the SLM 703 causing an optical misalignment to the left, where the position of the first control spot is shifted from position 1105 to position 1109 and the position of the second control spot is shifted from position 1107 to position 1111. Alternatively, there could be an optical misalignment to the right, where the position of the first control spot is shifted from position 1105 to position 1113 and the position of the second control spot is shifted from position 1107 to position 1115. In both cases, the image is translated in space.

In contrast, as described with reference to Figures 10E and 10F and shown in Figure 8, when the wavelength of the incident light changes the control spots move together or further apart such that the image (for example, the image at replay plane 909) is scaled in accordance with the equation above. For example, when the wavelength increases the position of the first control spot is shifted from position 1105 to position 1117 and the position of the second control spot is shifted from position 1107 to position 1119 and the image is magnified, as shown in Figure 8. Alternatively, when the wavelength decreases the position of the first control spot is shifted from position 1105 to position 1121 and the position of the second control spot is shifted from position 1107 to position 1123 and the image is demagnified. In other words, there is a change in the radial distance of both the first and second control image regions relative to a centre of the SLM. This change in the radial distance can be used to calculate the fractional change in the wavelength of the light, either by considering the relative position of the two control image regions, or by determining a fractional change in the radial distance of just one spot.

As such, the detector arrangement can distinguish from the arrangement described with reference to Figures 10C and 10D and the arrangement described with reference to Figures 10E and 10F based on the relative position of the control spots, or light, of the first and second control image regions. This is advantageous, since scaling or translations of the image displayed to a user need to be compensated for differently, as described below in more detail. As such, the present projection system enables the application of appropriate compensation to restore a distorted image to the original, intended, image.

The detector arrangement is arranged to output a first signal representative of a position of the first control image region based on the detection of light of the first control image region, and to output a second signal representative of a position of the second control image region based on the detection of light in the second control image region.

Optical Alignment Process

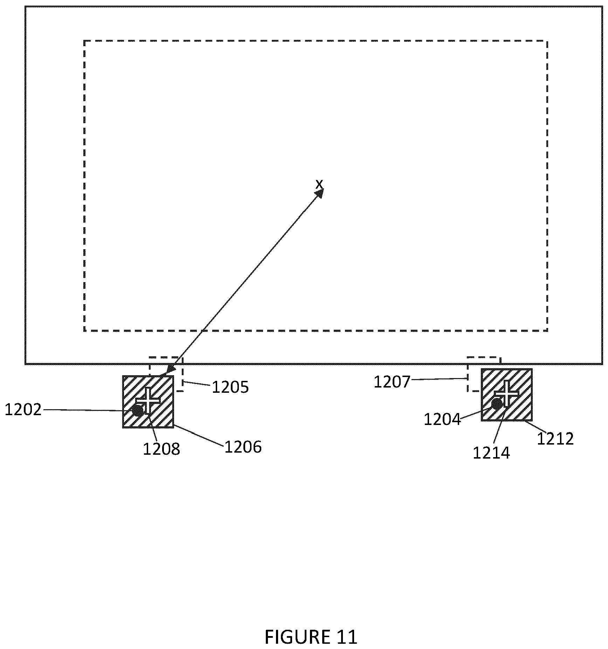

Typically, a PGU / HUD may experience a combination of both types of misalignment described above (caused by SLM tilt and by wavelength changes). Figure 11 shows features of a PGU of a HUD according to the present disclosure. The HUD according to the present disclosure is arranged to determine the optical misalignments caused by tilt of the SLM and distinguish those "tilt" misalignments from misalignments caused by wavelength changes.

Previously (for example, in Figure 10), the primary and secondary control regions have been shown as square bright regions on the replay plane. In the example of Figure 11, the primary and secondary control regions 1202, 1204 consist of single pixels (the primary control region 1202 consisting of a first pixel and the secondary control region 1204 consisting of a second pixel). The PGU further comprises a first mask 1206 comprising a cross-shaped aperture 1208 between the primary control region 1202 and the first detection area 1210 and a second mask 1212 comprising a cross-shaped aperture 1214 between the secondary control region 1216. The width of each of the cross-shaped apertures 1208, 1214 is less than the width of a pixel (i.e. less than the width of the primary control region 1202 and the secondary control region 1204). As will be explained in more detail below, the inventors have recognised that this arrangement enables very precise (at a sub-pixel level) identification of an aligned state of the primary and secondary control regions 1202, 1204 (because light forming the primary and secondary control regions 1202, 1204 may only be received at the respective first or second detection areas 1205, 1207 when primary and secondary control regions 1202, 1204 are exactly aligned with the first mask 1206 or second mask 1212, respectively).

The HUD is arranged to perform the following process to determine a correction / compensation which can be used to correct for the tilt of the SLM (and changes in the tilt of the SLM over time).

As above, the PGU comprises a processor. The processor is configured to causes the SLM of the PGU to display a diffractive pattern. The diffractive pattern comprises a computer-generated hologram (which is a hologram of a picture). The diffractive pattern also comprises one or more diffraction gratings. The skilled person will be familiar with the concept of using diffraction gratings having a desired grating spacing to achieve a translation of an image of a replay plane to position the image (holographic reconstruction) as desired. The diffractive pattern may comprise a first diffraction grating arranged to translate the image in a first dimension of the replay plane. The diffractive pattern may comprise a second diffraction grating arranged to translate the image in a second dimension of the replay plane (which, in this example is perpendicular to the first dimension).

Initially, for example on boot of the PGU, the processor is configured to cause the SLM of the PGU to display a first diffractive pattern comprising a first computer-generated hologram and first and second diffraction gratings. In this example, the first and second diffractions gratings are stored in a memory of the PGU. The first and second diffractions gratings stored in the memory of the PGU are pre-determined gratings that have been found, in a previous calibration, to properly align the image (holographic reconstruction) and so compensate for the tilt of the SLM at the time of the previous calibration. Thus, in this example, the first and second diffraction gratings are expected to exactly align the primary control region 1202 with the aperture of the first mask 1206 and the secondary control region 1204 with the aperture of the second mask 1212 (in the conditions of the previous calibration). However, this is not essential.

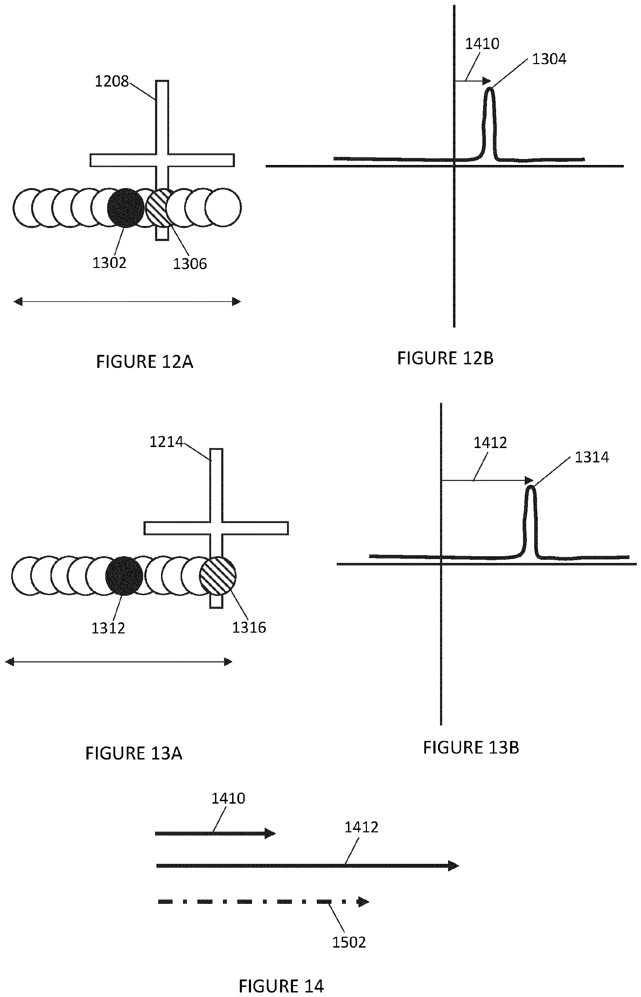

Generally, the conditions on boot of the PGU will not be the same as when the previous calibration was run. For example, the tilt of the SLM may have changed and / or the wavelength of the light may have changed. Thus, there is a need to run an optical alignment process to compensate for these changes. An optical alignment in a first dimension (parallel to the x-direction) is shown in Figure 12A, 12B, 13A and 13B.

Figure 12A and 13A, respectively, show a close-up of the cross-shaped apertures 1208, 1214 of the first and second mask 1206, 1212. The alignment process comprise moving the holographic reconstruction (image) in the first dimension by displaying a series of different diffraction gratings on the SLM. This may be referred to as performing a first scan. The diffraction grating causes the entire image to shift (such that a global shift is applied to all pixels of the image). Thus, the first pixel of the primary control region 1202 is moved by the same amount as the second pixel of the secondary control region 1204.

The movement of the primary control region 1202 with respect to the first mask 1206 is shown in Figure 12A. The initial (misaligned) position of the primary control region 1202 is represented by the shaded circle 1302. During the first scan, the primary control region 1202 is moved between a plurality of different positions along the first dimension (each position having a different diffraction grating associated therewith). While the primary control region 1202 is moved between the plurality of positions, the processor is arranged to receive signals from the first detection area. The signals are representative of a parameter detected by the first detection area of received light. In this example, the parameter is optical power. So, from the signal, the processor is arranged to determine the optical power associated with each position of the primary control region. In other words, the processor is arranged to determine the optical power associated with each (first) diffraction grating. Figure 12B shows a plot of position of the primary control region on the x axis and optical power on the y axis.

Figure 12B shows how there is an optical power peak 1304 at a particular position of the primary control region and that the optical power is otherwise at a low-level. Based on the position of the power peak 1304, the processor determines an aligned position of the primary control region 1202 with respect to the first mask 1206. In particular, the "aligned" position of the primary control region 1202 is represented by the circle 1306 comprising striped shading in Figure 12A. Because the aperture of the first mask 1206 is narrow, the intensity peak is also narrow. This allows for precise determination of the aligned position of the primary control region 1202.

The movement of the secondary control region 1204 with respect to the first mask 1212 is shown in Figure 13B. The initial (misaligned) position of the secondary control region 1204 is represented by the shaded circle 1312. During the first scan, the secondary control region 1204 is moved between a plurality of different positions along the first dimension (each position having a different diffraction grating associated therewith). While the secondary control region 1204 is moved between the plurality of positions, the processor is arranged to receive signals from the second detection area. The signals are representative of a parameter detected by the second detection area of received light. In this example, the parameter is optical power. So, from the signal, the processor is arranged to determine the optical power associated with each position of the second control region. In other words, the processor is arranged to determine the optical power associated with each (first) diffraction grating detected by the second detection area. Figure 13B shows a plot of position of the secondary control region on the x axis and optical power on the y axis. Figure 13B shows how there is an power peak 1314 at a particular position of the primary control region and that the optical power is otherwise at a low-level. Based on the position of the power peak 1314, the processor determines an aligned position of the secondary control region 1204 with respect to the second mask 1212. In particular, the "aligned" position of the secondary control region 1204 is represented by the circle 1316 comprising striped shading in Figure 13B. Because the aperture of the second mask 1212 is narrow, the intensity peak is also narrow. This allows for precise determination of the aligned position of the secondary control region 1204.

If all the pixels of the holographic reconstruction experienced the same misalignment relative to the previous calibration (e.g. because the misalignment were due solely to tilt of the SLM), then it would be expected that the same diffraction grating would result in both the primary control region 1202 and the second control region 1204 being aligned with the respective detection areas. However, as shown in Figures 12A to 13B, the aligned position of the primary control region 1202 is different to the aligned position of the secondary control region 1204. In particular, a smaller translation or displacement of the holographic reconstruction in the first dimension (from the initial position) is needed to align the primary control region 1202 than is needed to align the secondary control region. This is represented by arrows 1410 and 1412. Arrow 1410 (related to the primary control region) is shorter than arrow 1412 (related to the secondary control region). The reason for this is that the misalignment of each pixel is not just due to SLM tilt, but also due to a change in wavelength (relative to the previous calibration). As shown in Figure 9, a change in wavelength causes different amounts of movement of each pixel. For example, pixels on opposing sides of a centre of a replay field may be translated in opposing directions. In the case of Figure 13A, the translation in the first dimension of the primary control region 1202 caused by the change in wavelength is in an opposite direction to the translation caused by the change in tilt of the SLM. This results in the shortening of arrow 1410. In the case of Figure 13B, the translation in the first dimension of the secondary control region 1202 caused by the change in wavelength is in the same direction (parallel to the first dimension) as the translation caused by the change in tilt of the SLM. This results in the lengthening of arrow 1412.

The inventors have recognised that, by averaging the positions, the misalignment caused by the tilt of the SLM can be separated from the misalignment caused by the change in wavelength. Thus, the average aligned position gives an indication of the compensation needed to compensate for the tilt (separately from the compensated needed for the change in wavelength). This is represented by the dashed line 1502 of Figure 14. In some examples, the processor is arranged to determine the diffraction grating which would give rise to the translation in the first dimension required indicated by the dashed line 1502. The wavelength change can be compensated for in a separate routine, not disclosed here.

The above process has been described in relation to alignment in the first dimension. However, it should be clear to the skilled reader that the process can be repeated for alignment in the second dimension (to compensate for misalignments in the second dimension caused by the tilt of the SLM).

Pixel Re-centering

The inventors have found that, in real world scenarios, it is necessary for the above described optical alignment process to be performable during runtime of the PGU. For example, the tilt of the SLM may change during use of the PGU because of environmental changes and / or because of vibrations or other mechanical effects acting on the SLM. There is a need to repeatedly re-run the optical alignment process during runtime to check for these changes. However, the inventors have also found that the above method may adversely affect the viewing experience because the primary and / or secondary control regions can drift / shift relatively far from the respective mask. This is because the scan range needed to detect the relatively distance primary and / or secondary control region increases as the distance of the control region from the respective detection area also increases. Because the diffraction gratings used in the scans result in the entire replay field being translated, the picture content that is viewable to a user will also be shifted by the diffraction grating. The inventors have recognised that, during runtime, if relative large (e.g. multiple pixel length) scans are used, the shift to the picture content may be perceptible to a user. For example, the picture content may appear to jump around.

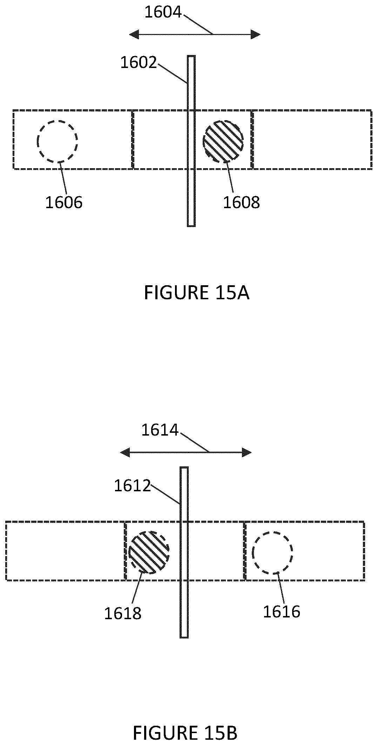

Any disruption to the viewing experience (for example, during runtime) may be minimised if a relatively small scan range is used in the optical alignment process. For example, the inventors have found that a scan range equivalent to a single pixel pitch can be used to minimise disruption (for example 0.5 of a pixel pitch in a first direction of the first dimension from an initial position and 0.5 of a pixel pitch in a second direction of the first dimension from the initial position). Of course, such a scan range may not be large enough to detect the first and / or second control region if the shift / misalignment of the control regions is greater than 0.5 pixel pitch (such that the control regions are greater than 0.5 pixel pitch from the first or second detection area). The present disclosure provides the technical advancement of repositioning / reselecting the first and second control regions and performing another (relatively short) scan can be with the repositioned / reselected first and second control regions. This is shown in Figure 15A and 15B.

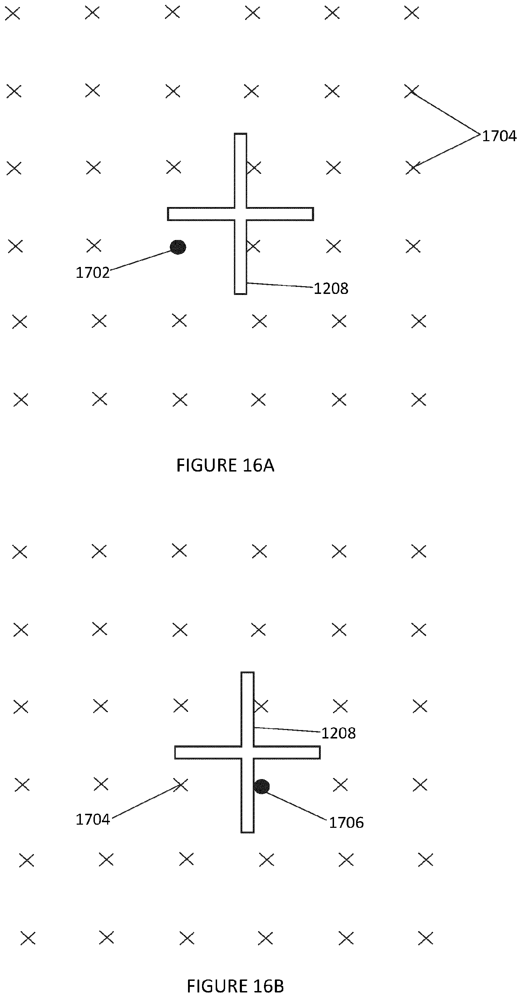

Figure 15A shows the reselection of the first control region. Figure 15A is focussed on the first mask 1206, but for simplicity only a single branch 1602 of the aperture 1208 of mask 1206 is shown in Figure 15A. The scan range relative to the first mask 1206 is represented by double-headed arrow 1604. Figure 16A shows the position of the first control region of a first holographic reconstruction of the first scan as an unshaded dotted circle 1606. As is clear from Figure 15A, the unshaded dotted circle 1606 is outside of the scan range 1604. So, during first scan, a power peak will not be detected. Thus, a second scan is performed using a second holographic reconstruction in which the first control region has been recentered / repositioned to be closer to the aperture 1602. The first control region of the second holographic reconstruction is represented by the shaded circle 1608 in Figure 15A.

Figure 15B shows the reselection of the second control region. Figure 15B is focussed on the second mask 1212, but for simplicity only a single branch 1612 of the aperture of mask 1212 is shown in Figure 15B. The scan range relative to the second mask 1212 is represented by double-headed arrow 1614. Figure 15B shows the position of the first control region of a first holographic reconstruction of the first scan as an unshaded dotted circle 1616. As is clear from Figure 15B, the unshaded dotted circle 1616 is outside of the scan range 1614. So, during first scan, a power peak will not be detected. Thus, a second scan is performed using a second holographic reconstruction in which the second control region has been recentered / repositioned to be closer to the aperture 1612. The first control region of the second holographic reconstruction is represented by the shaded circle 1618 in Figure 15B.

Figure 16A and 16B show respective portions of the first and second holographic reconstructions in combination with the aperture 1208 first mask 1206. Figure 16A shows how the first control region of the first holographic reconstruction is formed in a first pixel position (and consists of first pixel 1702 represented by a black circle). This first pixel 1702 may be referred to as being switched "on". All other neighbouring pixels are switched "off" (with "off" pixels being represented by crosses 1704 in Figure 16A). Figure 16B shows how, after first control region has been repositioned in the second holographic reconstruction, it is formed at a second pixel position (and consists of second pixel 1706 represented by a black circle). The second pixel 1706 is now "on" while the first pixel 1702 (and all other pixels shown in Figure 16B) are "off".

For the avoidance of doubt, the crosses 1704 of Figure 16A and 16B are merely representative of an "off" pixel. These crosses are not visible in the actual holographic reconstruction.

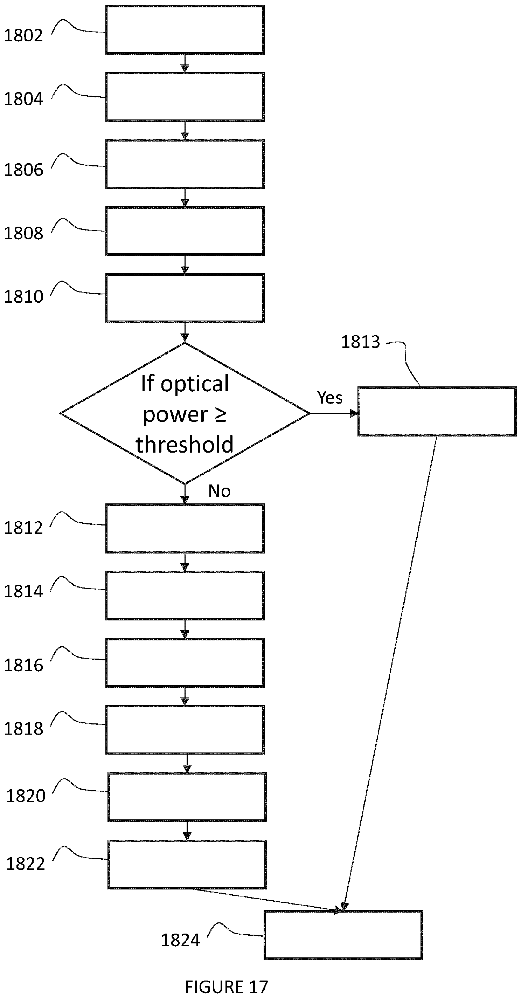

The pixel re-centering process will now be described in more detail in combination with the flow chart of Figure 17.

The picture generating unit described above is arranged to form a holographic reconstruction of a picture (or a sequence of pictures) comprising an array of pixels. Step 1802 of the process comprises selecting a first pixel of the array of pixels and a second pixel of the array of pixels. The selected first pixel of the array of pixels is used to form the first control region for the first scan. The selected second pixel of the array of pixels is used form the second control region for the first scan.

Step 1804 of the process comprises selecting an appropriate first picture comprising the first and second control regions (consisting, respectively, of the first and second selected pixels). Step 1804 of the process further comprises forming a first holographic reconstruction of the first picture. Step 1804 comprises determining a diffractive pattern by computer-generating a first hologram of the first picture. Step 1804 may optionally further comprise superimposing or otherwise adding a diffraction grating to the first hologram such that the diffractive pattern comprises a first component being the computer-generated first hologram and the diffraction grating. The diffraction grating may be a diffraction grating that has been determined in a different (previous) calibration process to align the holographic reconstruction or in a previous run of the optical alignment process according to the present disclosure. The first holographic reconstruction comprises first and second holographically reconstructed primary and secondary control regions.

Step 1806 of the process comprises moving / scanning the first holographic reconstruction on a replay plane with respect to the first and second detection areas such that the first holographic reconstruction is moved between a plurality of positions. This is represented in Figures 12A and 13A, as described above.

Step 1808 of the process comprises determining a value for a parameter of the light received by the first and second detection areas in each of the plurality of positions of the first holographic reconstruction. The parameter in this example is optical power. The value for the optical power (in each position) is determined based on signals received at a processor of the HUD from each of the first and second detection areas.

Step 1810 of the process comprises comparing each respective determined optical power value (for each of the plurality of positions) with a threshold condition. The threshold condition in this example is whether the optical power value equals or exceed a minimum. The minimum is a predetermined value stored in the memory of the HUD. The minimum is a value that is representative of a peak optical power as would be expected in an aligned state of the respective primary or secondary control region with the first or second detection area. If the threshold condition is met for both of the first and second detection areas, then step 1813 is performed and the diffraction grating that achieved the peak optical power is determined for each of the first and second control regions. If the threshold condition is not met for one or both of the first and second detection areas, then the process proceeds to step 1812 and the optical alignment process is repeated for each of the control regions which were not detected to be in an aligned position during the first scan (e.g. primary and / or secondary control regions).

Step 1812 of the process comprises repositioning the primary and / or secondary control regions. Repositioning the primary control region comprises selecting a third pixel of a second picture that is different to and neighbours the first pixel. In this example, the third pixel is immediately adjacent the first pixel in a first direction of the first dimension. Repositioning the secondary control region comprises selecting a fourth pixel of the second picture that is different to and neighbours the second pixel. In this example, the fourth pixel is immediately adjacent the second pixel in a second direction (opposite to the first direction) of the first dimension.

Step 1814 comprises selecting an appropriate second picture comprising reselected primary and secondary control regions(consisting, respectively, of the third and fourth selected pixels). Step 1816 of the process comprises forming a second holographic reconstruction of the second picture. Step 1816 comprises determining a diffractive pattern by computer-generating a second hologram of the second picture. Step 1816 may optionally further comprise superimposing or otherwise adding a diffraction grating to the second hologram such that the diffractive pattern comprises a first component being the computer-generated second hologram and the diffraction grating. The diffraction grating may be the diffraction grating that has been determined in a previous calibration process to align the holographic reconstruction. The second holographic reconstruction comprises first and second holographically reconstructed primary and secondary control regions in the third and fourth pixel positions, respectively.

Step 1816 of the process comprises moving / scanning the second holographic reconstruction on a replay plane with respect to the first and second detection areas such that the first holographic reconstruction is moved between a plurality of positions.

Step 1818 of the process comprises determining a value for a parameter of the light received by the first and second detection areas in each of the plurality of positions of the second holographic reconstruction. The parameter in this example is optical power. The value for the optical power (in each position) is determined based on signals received at a processor of the HUD from each of the first and second detection areas.

Step 1820 of the process comprises comparing each respective determined optical power value (for each of the plurality of positions of the second holographic reconstruction) with the threshold condition. If the threshold condition is met for both of the first and second detection areas, then step 1822 is performed and the diffraction grating that achieved the peak optical power is determined for each of the first and second control regions of the second holographic reconstruction.

The final step of the process is step 1824 which is either performed after step 1813 or step 1822 (once diffraction gratings associated with the peak optical power of the primary and second control regions have been detected, which may be after the first scan or after the second scan, as above).

Step 1824 comprises determining a new grating function which is used to compensate for the tilt misalignment in the first dimension. Step 1824 comprises determining the average of the gradient functions needed to achieve alignment of the primary and second control regions. Step 1824 further comprises adding the average to the initial gradient function.

Additional features

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

**Claims**

1. A holographic projection system for forming, at a replay plane, a holographic reconstruction of a picture comprising an array of pixels, the system comprising a detector arrangement arranged to detect light received by a first detection area; wherein the holographic projection system is arranged to perform an optical alignment process comprising:

   selecting a first pixel of the array of pixels;
   forming a first holographic reconstruction of a first picture, the first picture comprising a primary control region comprising the selected first pixel;
   moving the first holographic reconstruction with respect to the first detection area in a first dimension of the replay plane such that the first holographic reconstruction is moved between a plurality of positions; and
   determining a value for a parameter of the light received by the first detection area in each of the plurality of positions and comparing each respective determined parameter value to a threshold condition;
   wherein, if the threshold condition is not met over the plurality of positions, the holographic projection system is arranged to repeat the optical alignment process by: selecting a second pixel of the array of pixels that neighbours the first pixel; and forming a second holographic reconstruction of a second picture, the second picture comprising a primary control region comprising the second pixel.

2. A holographic projection system as claimed in claim 1, wherein the detector arrangement is further arranged to detect light received by a second detection area.

3. A holographic projection system as claimed in claim 2, wherein the optical alignment process further comprises selecting a third pixel of the array of pixels, and wherein the first picture further comprises a secondary control region comprising the selected third pixel.

4. A holographic projection system as claimed in claim 2 or 3, wherein the optical alignment process further comprises detecting, at the plurality of positions of the first holographic reconstruction, a parameter of the light received by the second detection area and comparing the detected parameter to a threshold condition.

5. A holographic projection system as claimed in claim 4, wherein the holographic projection system is arranged to determine a first aligned position of a holographic reconstruction of the first primary control region based on the threshold condition being met by the detected parameter of the light received by the first detection area; and a second aligned position of a holographic reconstruction of the first secondary control region based on the threshold condition being met by the detected parameter of the light received by the second detection area, optionally wherein the holographic projection system is arranged to determine an average of the first and second aligned positions.

6. A holographic projection system as claimed in any one of claims 3 to 5, wherein the repeated optical alignment process comprises selecting a fourth pixel of the array of pixels that neighbours the second pixel; and wherein the second picture further comprises a secondary control region comprising the selected fourth pixel.

7. A holographic projection system as claimed in any one of claims 3 to 6, wherein the first pixel neighbours the third pixel in a first direction of the first dimension, and the second pixel neighbours the fourth pixel in a second direction of the first dimension opposite to the first direction.

8. A holographic projection system as claimed in any one of the preceding claims, wherein the parameter of light measured by the first detection area relates to optical power.

9. A holographic projection system as claimed in any one of the preceding claims, wherein the holographic projection system is arranged to select the second pixel as a nearest neighbour of the first pixel in a direction of the first dimension.

10. A holographic projection system as claimed in any one of the preceding claims, wherein the first and second primary control region of the respective first and second picture consist, respectively, of the selected first or second pixel.

11. A holographic projection system as claimed in any one of the preceding claims, wherein the holographic projection system is arranged to move the first holographic reconstruction in the first dimension a total distance that is less than or equal to a pixel pitch of the first holographic reconstruction.

12. A holographic projection system as claimed in any one of the preceding claims, wherein the holographic projection system comprises a display device arranged to display a diffractive pattern comprising a hologram of a picture and to spatially modulate light incident thereon in accordance with the diffractive pattern to form a holographic wavefront.

**13.** A holographic projection system as claimed in claim 12, wherein the holographic projection system is arranged such that a diffractive pattern comprising a first hologram of the first picture is displayed on the display device during the step of forming the first holographic reconstruction of the first picture, optionally wherein the holographic projection system is arranged such the diffractive pattern further comprises a grating function, and wherein the holographic projection system is arranged to change the grating function of the diffractive pattern to move the first holographic reconstruction, further optionally wherein the holographic projection system is arranged to change the grating function of the diffraction pattern to move the first holographic reconstruction between the plurality of positions, and even further optionally wherein the holographic projection system is arranged to determine the grating function which gives rise to the greatest detected parameter.

**14.** A holographic projection system as claimed in any one of the preceding claims, further comprising a mask comprising an aperture, wherein the first detection area is arranged to detect light received through the aperture of the mask, optionally wherein the width of the aperture in the first dimension is less than a dimension of the first pixel in the first dimension.

**15.** An optical alignment method for a holographic projection system arranged to form a holographic reconstruction of a picture comprising an array of pixels, the method comprising:

    selecting a first pixel of the array of pixels;
    forming a first holographic reconstruction of a first picture, the first picture comprising a first primary control region comprising the selected first pixel;
    moving the first holographic reconstruction with respect to the first detection area in a first dimension of the replay plane such that the first holographic reconstruction is moved between a plurality of positions; and
    determining a value for a parameter of the light received by a first detection area of a detector of the holographic projection system in each of the plurality of positions and comparing each respective determined parameter value to a threshold condition;
    wherein, if the threshold condition is not met over the plurality of positions, the method comprises repeating the optical alignment process by: selecting a second pixel of the array of pixels that neighbours the first pixel; and forming a second holographic reconstruction of a second picture, the second picture comprising a second primary control region comprising the second pixel.

FIGURE 1

230

210

202A

250

280A

253

256

259

213A    211A

FIGURE 2A

FIGURE 2B

FIGURE 2C

FIGURE 3

FIGURE 4

FIGURE 5

FIGURE 6

FIGURE 7

FIGURE 8

1002
1004
1006

FIGURE 9

FIGURE 10A

1101          1103

FIGURE 10B

1105          1107

FIGURE 10C

1109          1111

FIGURE 10D

1113          1115

FIGURE 10E

1117          1119

FIGURE 10F

1121          1123

FIGURE 11

FIGURE 12A

FIGURE 12B

FIGURE 13A

FIGURE 13B

FIGURE 14

1604

1602

1606          1608

FIGURE 15A

1614

1612

1618          1616

FIGURE 15B

FIGURE 16A

FIGURE 16B

1802

1804

1806

1808

1810

If optical power ≥ threshold

1813

Yes

No

1812

1814

1816

1818

1820

1822

1824

FIGURE 17

Europäisches
Patentamt

European
Patent Office

Office européen
des brevets

# EUROPEAN SEARCH REPORT

**Application Number**

EP 24 18 8629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 598 604 A (ENVISICS LTD [GB]) 9 March 2022 (2022-03-09) * page 19, line 20 - page 27, line 31; figures 1, 4-8 * * page 9, line 4 - page 18, line 11 * | 1-15 | INV. G03H1/22 G06V10/24 ADD. G03H1/08 |
| A | EP 3 686 692 A1 (DUALITAS LTD [GB]) 29 July 2020 (2020-07-29) * paragraph [0090] - paragraph [0127]; figures 4-9 * | 2-7 | |
| A | EP 3 408 711 B1 (DUALITAS LTD [GB]) 12 June 2019 (2019-06-12) * paragraph [0096] - paragraph [0097]; figure 11 * | 14 | |

TECHNICAL FIELDS SEARCHED (IPC)

G03H
H04N
G06V

The present search report has been drawn up for all claims

| Place of search | Date of completion of the search | Examiner |
|---|---|---|
| Munich | 11 December 2024 | Lutz, Christoph |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 8629

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2024

| Patent document cited in search report | | Publication date | Patent family member(s) | | Publication date |
|---|---|---|---|---|---|
| GB 2598604 | A | 09-03-2022 | GB | 2598604 A | 09-03-2022 |
| | | | US | 2022075317 A1 | 10-03-2022 |
| EP 3686692 | A1 | 29-07-2020 | CN | 111486975 A | 04-08-2020 |
| | | | EP | 3686692 A1 | 29-07-2020 |
| | | | GB | 2580696 A | 29-07-2020 |
| | | | PL | 3686692 T3 | 07-02-2022 |
| | | | US | 2020241473 A1 | 30-07-2020 |
| | | | US | 2024152093 A1 | 09-05-2024 |
| EP 3408711 | B1 | 12-06-2019 | CN | 110050235 A | 23-07-2019 |
| | | | EP | 3408709 A1 | 05-12-2018 |
| | | | EP | 3408710 A1 | 05-12-2018 |
| | | | EP | 3408711 A1 | 05-12-2018 |
| | | | EP | 4246244 A2 | 20-09-2023 |
| | | | ES | 2730558 T3 | 11-11-2019 |
| | | | JP | 6860669 B2 | 21-04-2021 |
| | | | JP | 2020503538 A | 30-01-2020 |
| | | | KR | 20190076056 A | 01-07-2019 |
| | | | PL | 3408710 T3 | 30-09-2019 |
| | | | WO | 2018100394 A1 | 07-06-2018 |
| | | | WO | 2018100395 A1 | 07-06-2018 |
| | | | WO | 2018100397 A1 | 07-06-2018 |

EPO FORM P0459

For more details about this annex : see Official Journal of the European Patent Office, No. 12/82

**REFERENCES CITED IN THE DESCRIPTION**

**Patent documents cited in the description**

- GB 2559112 B
- GB 2498170 A
- GB 2501112 A